# EUROPÄISCHE PATENTSCHRIFT

(11) **EP 2 491 184 B1**
(45) Veröffentlichungstag und Bekanntmachung des Hinweises auf die Patenterteilung: **29.01.2014**
(21) Anmeldenummer: 10787668.2
(22) Anmeldetag: 20.10.2010
(51) Int. Cl.: E02D 27/01, E02D 27/44, G07F 9/10

(54) **FUNDAMENTSYSTEM ZUR LASTABTRAGENDEN AUFNAHME EINES GEHÄUSES ODER VON WENIGSTENS EINEM GEHÄUSEMODUL EINES SELBSTBEDIENUNGSAUTOMATEN**
FOUNDATION SYSTEM FOR RECEIVING THE LOAD OF A HOUSING OR OF AT LEAST ONE HOUSING MODULE OF A SELF-SERVICE MACHINE
SYSTÈME DE FONDATIONS POUR RECEVOIR, AVEC UN TRANSFERT DE CHARGE, UN BOÎTIER OU AU MOINS UN MODULE DE BOÎTIER D'UN AUTOMATE EN LIBRE-SERVICE

(30) Priorität: 20.10.2009 AT 16442009
(43) Veröffentlichungstag der Anmeldung: 29.08.2012
(73) Patentinhaber: KEBA AG, A-4041 Linz (AT)
(72) Erfinder: HAIDVOGL, Franz Engelbert, A-4694 Ehrendorf (AT)
(74) Vertreter: Burger, Hannes
(86) Internationale Anmeldenummer: PCT/AT2010/000398
(87) Internationale Veröffentlichungsnummer: WO 2011/047401

(56) Entgegenhaltungen:
- DE-A1- 4 427 653
- DE-C1- 10 007 932
- DE-U1- 20 216 236
- ES-A1- 2 344 394
- JP-A- 57 140 429

## Beschreibung

Die Erfindung betrifft ein Fundamentsystem zur lastabtragenden Aufnahme eines Gehäuses oder Gehäusemoduls von Selbstbedienungsautomaten, wie es im Oberbegriff des Anspruches 1 angegeben ist.

In der Praxis werden Selbstbedienungsautomaten zumeist auf einem ausreichend ebenen bzw. auf einem möglichst horizontal ausgerichteten Untergrund aufgestellt. Insbesondere im sogenannten Indoor-Bereich liegen Bodenflächen vor, auf welchen eine Aufstellung von Selbstbedienungsautomaten relativ problemlos möglich ist. In solchen Fällen können die Automatengehäuse ein podestartiges Grundelement aufweisen, welches direkt auf dem jeweiligen Bodenbelag aufliegt. Weiters sind Automatengehäuse bekannt, welche gegenüber dem Automatengehäuse bedarfsweise heraus- und hineinschraubbare Stellfüße aufweisen, um bei geneigten Hallenböden, oder bei sonstigen Stellflächen mit einer gewissen Neigung oder Unebenheit, eine stabile und möglichst exakte, vertikale Ausrichtung des Automatengehäuses zu erzielen. Derartige Stellfüße stützen sich mittels Stützflächen, welche maximal in etwa Handflächengröße aufweisen, auf der jeweiligen Bodenfläche ab. Solche Stellfüße haben sich im Indoor-Bereich, in welchem üblicherweise eine ausreichende Tragfähigkeit des Bodens vorliegt, gut bewährt. Im Außenbereich sind solche Stellfüße jedoch nur bedingt geeignet. Aber auch dann, wenn relativ großvolumige Automatengehäuse im Außenbereich zu installieren sind, stoßen solche Stellfüße rasch an vielschichtige Einsatzgrenzen. Bei größeren Selbstbedienungsautomaten, insbesondere in Form von relativ großvolumigen bzw. relativ große Stellflächen erfordernden Schließfachsystemen oder Aufbewahrungsautomaten für die Zustellung und Abholung von Waren oder postalischen Gegenständen, sind solche höheneinstellbaren Stellfüße nur bedingt zufrieden stellend. Ein weiteres Problem liegt darin, dass die Automaten nicht nur einigermaßen senkrecht stehen sollen, sondern auch geeignet gegen Umkippen gesichert sein müssen. Vor allem bei Automaten mit relativ geringer Bautiefe und große Höhe ist dies ein eminentes Problem. Einfache Stellfüße unterhalb der Gehäusegrundfläche sind dafür schlecht geeignet bzw. müssen diese im Untergrund geeignet verankert werden, wofür zumeist mehrere Schraubenanker verwendet werden. Vielfach wurden daher betonierte, in den Untergrund eingegossene Fundamente erstellt, um eine ausreichend ebene und tragfähige Basis für solche Schließfach- bzw. Aufbewahrungsautomaten zu schaffen. Hierbei wurden im Falle eines nicht ausreichend tragfähigen Untergrundes die oberen Bodenschichten abgetragen und wurde sodann an Ort und Stelle eine Fundamentplatte aus Fließbeton erstellt. Dabei wurde vor dem Einbringen des Ortbetons eine entsprechende Betonschalung errichtet. Nach ausreichender Aushärtung des eingegossenen Fließbetons konnte dann die Betonschalung entfernt werden. Nach endgültiger Aushärtung bzw. nach ausreichender Belastbarkeit der betonierten Fundamentplatte war es möglich, einen entsprechenden Selbstbedienungsautomaten darauf abzustellen und mit dem in den Bodenaufbau integrierten Betonfundament zu verankern. Diese Fundamentierungsmaßnahmen sind aufwendig und nur bedingt zufrieden stellend. Insbesondere erfordern diese Betonarbeiten im Zuge der Errichtung eines Automaten handwerklich entsprechend ausgebildete Fachkräfte und umfangreiche bzw. vor allem zeitaufwändige Arbeiten direkt am Aufstellungsort eines Automaten sowie zusätzliche Wartezeit bis zur Aushärtung des Betons und der dann erst möglichen Aufstellung des eigentlichen Automaten. Darüber hinaus ist eine spätere Änderung, Erweiterung oder Abtragung des Fundaments nicht oder nur mit vergleichsweise hohem Aufwand möglich.

Aus der WO 2005/028340 A1 und der US 5,881,527 A ist es bekannt, vorgefertigte Plattenfundamente aus Beton zu bilden, welche aus mehreren, aneinander gefügten Plattenelementen bestehen. Diese Plattenelemente sind mit maschinellen Hebemitteln, wie zum Beispiel Lastenkränen, an den jeweiligen Aufbauort zu heben. Anschließend werden die einzelnen Plattenelemente mittels diverser Verbindungselemente zu einer einstückigen Fundamentplatte aus Beton verbunden. Die Oberseite dieser mehrteiligen, zu einem einstückigen Betonkörper verbundenen Fundamentplatte ist sodann zur Aufnahme von kleinen Gebäuden oder von ähnlichen Speicherobjekten vorgesehen. Beispielsweise können darauf Tanks und Zusatzausrüstungen für die Lagerung und Bereitstellung von chemischen Stoffen abgestellt und montiert werden. Diese bekannten Konstruktionen sind jedoch für die Aufstellung von Selbstbedienungsautomaten, welche in der Größenordnung von Kästen bis hin zu kleinen Räumen liegen, nicht zufrieden stellend.

Die DE 44 27 653 A1 beschreibt eine Kleinbank für Geldtransaktionen, welche Kleinbank auf einem unterirdischen Stahlbeton-Fundament abreißsicher verankert ist. Diese Kleinbank für Geldtransaktionen umfasst einen Tresor mit einem Geldausgabeautomaten, einen Sicherheitsschrank mit Sicherheitseinrichtungen und eine Kabine. Eine solche Kleinbank dient als sogenannter City-Cash-Point, welcher die Geldausgabe für Bankkunden erheblich erleichtern soll. Diese Kleinbank hat Sicherheitsaspekte in Bezug auf kriminelle Aktionen bzgl. räuberische Handlungen zu erfüllen. Um diesen Anforderungen zu entsprechen, ist vorgesehen, dass das unterirdische Stahlbeton-Fundament der Kleinbank einen gegenüber dem quaderförmigen Grundkörper vorkragenden Fundamentfuß aufweist, welcher im Erdreich eingebettet ist. Dieses Stahlbeton-Fundament kann dabei als Fertigteilelement ausgeführt sein, wobei an dessen Fundamentplatte der Fundamentfuß angeformt ist. Auf dieser Fundamentplatte ist ein hohlzylindrischer Fundamentköcher ausgeformt, der zur Aufnahme einer Ortbetonfüllung vorgesehen ist, um dadurch einen stabilen Fundamentklotz zu bilden. An der Oberseite dieses Stahlbeton-Fundamentes ist eine Bodenplatte aus Stahlbeton ausgebildet, welche mit dem darunter befindlichen Stahlbeton-Fundament verankert ist. Der Sicherheitsschrank und die Kabine der Kleinbank sind auf dieser Bodenplatte befestigt. Dabei kann auch vorgesehen sein, dass auf dem oberen Rand des Stahlbeton-Fundamentes ein Winkeleisenrahmen befestigt, z.B. aufgeschraubt, ist. In diesen umlaufenden Winkeleisenrahmen ist ein Bodenrahmen mit Stellschrauben zur Aufnahme der Bodenplatte und zur Anpassung an die Erdgleiche eingesetzt. Alternativ kann das Stahlbeton-Fundament bzw. dessen Fundamentklotz eine umlaufende, aus dem Betonkörper ausgesparte Aufnahme für die Bodenplatte aus Stahlbeton aufweisen. Durch gegenseitiges Verbinden und Verankern des Stahlbeton-Fundaments, der darauf aufgesetzten Bodenplatte und den Elementen der Kleinbank soll eine Fundamentierung geschaffen werden, die in bautechnischer Hinsicht den Sicherheitsgesichtspunkten eines Kreditinstitutes entspricht. Mit dieser Ausführungsform wird zwar eine relativ manipulationssichere und vor kriminellen Entfernungsversuchen relativ gut schützende Fundamentierung geschaffen, die unterirdische Einbettung des Stahlbeton-Fundamentes erfordert jedoch Grabungsarbeiten, welche hohen Aufwand mit sich bringen und insbesondere in städtischen Umgebungen besondere Vorsicht in Bezug auf im Boden verlegte Versorgungsleitungen, insbesondere Rohrleitungen, Kabel und dergleichen, erfordern.

Die DE 100 07 932 C1 beschreibt einen höhenverstellbaren Sockel für Geldautomaten oder ähnliche sicherheitsrelevante Geräte. Dieser Sockel ist als Blechkomponentenkonstruktion ausgeführt und bietet dem darauf abgestellten Gerät durch eine Verankerung mittels Bodenschrauben oder Bodenankern ausreichende Standfestigkeit. Insbesondere ist eine am Boden durch Schrauben oder sonstige Verankerungsmittel befestigbare Bodenrahmenbaugruppe vorgesehen. Auf dieser mit dem Boden zu verankernden Bodenrahmenbaugruppe ist eine Trägerbaugruppe aufgesetzt, welche gegenüber der Bodenrahmenbaugruppe teleskopartig höhenverstellbar ist. Durch die teleskopartig zueinander verstellbare Bodenrahmenbaugruppe und Trägerbaugruppe ist eine Höheneinstellung des auf dem Sockel abgestützten Gerätes ermöglicht. Ohne mehrfacher Verankerung der Bodenrahmenbaugruppe mit dem Untergrund bietet dieses Sockelelement, welches aus einer metallischen Rahmenkonstruktion gebildet ist, nur eine bedingt zufriedenstellende Standsicherheit für das darauf abgestützte Gerät, insbesondere für einen Geldautomaten.

Auch die DE 202 16 236 U1 beschreibt einen Sockel für Geldautomaten, welcher Sockel durchgängig aus metallischen Rahmenteilen und Blechkomponenten gefertigt ist. Insbesondere umfasst dieser Sockel eine Trägerplatte, auf welcher ein entsprechender Automat gehalten werden soll, und eine Mehrzahl von Trägerfüßen, welche die Trägerplatte im gewünschten Abstand über einem bodenseitigen Basisrahmen halten. Die Trägerfüße sind dabei derart ausgebildet, dass sie auf dem Basisrahmen in verschiedenen Ausrichtungen bzw. Orientierungen montiert werden können, um für verschiedene Höhenniveaus der Trägerplatte im Verhältnis zum Basisrahmen zu sorgen. Auch diese Sockelkonstruktion bedarf einer Verankerung mit dem Bodenbereich, um schrankartige Automaten möglichst standsicher abstützen zu können. Hierfür sind im Basisrahmen eine Mehrzahl von Öffnungen bzw. Bohrungen ausgebildet, welche zum Aufnehmen von Bodenschrauben und zum Befestigen des Basisrahmens am Boden vorgesehen sind.

Die JP 57 140429 A beschreibt ein Betonfundament, welches im Boden bzw. im Erdreich verankert ist bzw. relativ weit über das Bodenniveau hochragt und an seiner Oberseite wenigstens eine nach oben hin abstehende Verankerungsschraube aufweist. An der Oberseite dieses Betonfundaments ist eine Eisenplatte vorgesehen, welche zur Abstützung von Geräten vorgesehen ist. Um eine horizontale Ausrichtung dieser Eisenplatte zu erzielen, ist zwischen der Unterseite der Eisenplatte und der Oberseite des Betonfundaments wenigstens ein Einstellmittel, insbesondere zumindest eine Einstellschraube in Verbindung mit wenigstens einer Schraubenmutter vorgesehen. Mittels dieser Einstellmittel wird eine horizontale Ausrichtung der Eisenplatte gegenüber dem Betonfundament erzielt. Die durch die Eisenplatte hindurchragende Verankerungsschraube, welche im Betonfundament verankert ist, unterbindet ein Abheben der Eisenplatte gegenüber dem Betonfundament. Der Freiraum zwischen der Eisenplatte und dem Betonfundament wird nach der durchgeführten Nivellierung mit einem nicht komprimierbaren Injektionsgut, insbesondere mit einem Einspritzmörtel ausgefüllt, sodass die Einstellmittel in diesem Injektionsgut dauerhaft eingegossen sind. Mit dieser Ausführung ist zwar eine manipulationssichere und stabile Sockelausführung erzielt, das Betonfundament ist jedoch auch hierbei in eine Bodenausnehmung einzugießen, um ausreichende Standfestigkeit bzw. niedrige Standhöhe zu erzielen. Ein weiterer Nachteil liegt darin, dass die Einstellmittel nach erfolgter Ausnivellierung im Beton eingegossen sind und eine nachträgliche Justierung bzw. eine zerstörungsfreie Demontage somit nicht ermöglicht ist.

Der vorliegenden Erfindung liegt die Aufgabe zugrunde, ein verbessertes Fundamentsystem zur lastabtragenden Aufnahme eines Gehäuses oder von wenigstens einem Gehäusemodul eines Selbstbedienungsautomaten zu schaffen. Insbesondere ist ein Fundamentsystem anzugeben, welches einen möglichst kurzfristigen Aufbau eines Selbstbedienungsautomaten auch dann ermöglicht, wenn dieser im Außenbereich zu positionieren ist und unter Umständen ungewisse oder unterschiedliche Bodenverhältnisse vorliegen.

Diese Aufgabe der Erfindung wird durch ein Fundamentsystem gemäß Anspruch 1 gelöst.

Ein sich durch die erfindungsgemäße Ausgestaltung einstellender Vorteil liegt darin, dass ein aus zumindest einem Gehäuse oder ein aus mehreren Gehäusemodulen bestehender Selbstbedienungsautomat innerhalb relativ kurzer Zeit errichtet werden kann. Insbesondere können relativ kurze Aufbauzeiten erzielt werden und ist zudem eine hohe Montagegenauigkeit bzw. eine hohe Montagequalität erzielbar. Ferner bietet das einen Betonkörper aufweisende Sockelelement eine hohe Standfestigkeit bzw. eine optimale Standsicherheit für den jeweiligen Selbstbedienungsautomaten. Eine Verankerung des wenigstens einen Betonkörper umfassenden Sockelelementes gegenüber dem jeweiligen Untergrund kann dabei in vielen Fällen erübrigt werden. Somit lassen sich die Montagezeiten weiter verkürzen und ist außerdem die Gefahr einer Beschädigung von im Untergrund gegebenenfalls geführten Leitungen, wie zum Beispiel Strom-, Telekommunikations-, Wasser- oder Gasleitungen, minimiert bzw. gänzlich ausgeschaltet. Der Betonkörper bildet dabei ein stabiles, rasch installierbares und auch gegenüber Umwelteinflüssen, wie zum Beispiel Streusalz, Nässe und tierischen Schädlingen, insbesondere Nagetieren, besonders unempfindliches Fundamentbestandteil aus. Insbesondere ist der wenigstens eine, quasi einen Standfuß bildende Betonkörper des Sockelelementes relativ unempfindlich gegenüber säurehältigen Bedingungen, welche beispielsweise durch Streusalz oder tierisches Urin hervorgerufen werden, sodass das erfindungsgemäße Fundamentsystem für einen Selbstbedienungsautomaten relativ langfristig optisch ansprechend ist bzw. möglichst wartungsfrei ist. In Verbindung mit dem metallischen Tragelement, welches relativ zum Betonkörper ausnivellierbar ist, können dem Betonkörper bzw. dessen Aufstellungsort innewohnende Toleranzen bzw. Ungenauigkeiten auf einfache Art und Weise und optisch ansprechend ausgeglichen werden, sodass eine möglichst exakte bzw. ordnungsgemäße Ausrichtung des wenigstens einen Automatengehäuses vorgenommen werden kann. Diese Justierung ist dabei durch die manuell bedienbare Einstellvorrichtung relativ rasch und zugleich mit hoher Genauigkeit bzw. ausreichender Qualität ausführbar. Das heißt, dass gewisse Bodenunebenheiten von der Einstellvorrichtung für das Tragelement rasch und einfach ausgeglichen werden können, sodass eine absolut ebenflächige und horizontale Abstützebene für das jeweilige Gehäuse oder Gehäusemodul vorliegt. Das metallische Tragelement ermöglicht dabei eine einfache und zuverlässige Verbindung mit dem Gehäuse oder Gehäusemodul, sodass auch hohen Sicherheitsanforderungen Rechnung getragen wird. Durch die Einstellvorrichtung für das Tragelement können zum einen abschüssige oder unebene Geländeverläufe ausgeglichen werden. Darüber hinaus spielen die einem Betonkörper innewohnenden Maßtoleranzen nur eine untergeordnete Bedeutung, da diese mittels der Einstellvorrichtung ebenso problemlos kompensiert werden können. Folglich können auch die Kosten für die Aufbereitung des Standortes und die Herstellung und die Montage bzw. Errichtung des erfindungsgemäßen Fundamentsystems möglichst niedrig gehalten werden.

Ein besonderer Vorteil der erfindungsgemäßen Maßnahmen liegt auch darin, dass dadurch die Standfestigkeit bzw. Standsicherheit des Fundamentsystems weiter gesteigert werden kann. Darüber hinaus wird quasi ein gepflasterter Vorbereich geschaffen, welcher den Selbstbedienungsautomaten in gewissem Ausmaß vor Beschädigungen oder Verunreinigungen schützt. Außerdem ist dadurch ein definierter bzw. quasi abgegrenzter Vorplatzbereich geschaffen. Insbesondere wird ein quasi vergrößerter Standfuß geschaffen, der die Standsicherheit des Fundamentsystems deutlich steigert, ohne dass Grabungsarbeiten erforderlich sind. Außerdem wird dadurch auch eine Installation an geneigten Plätzen bzw. Straßenabschnitten bzw. eine Aufstellung im Bereich von mit Fahrzeugen befahrbaren Abschnitten ermöglicht. Insbesondere wird durch den Zusammenhalt zwischen den einzelnen Pflasterungselementen und dem wenigstens einen Sockelelement eine Relativverschiebung des Fundamentsystems gegenüber dem Untergrund erschwert bzw. hintan gehalten.

Durch die Ausgestaltung nach Anspruch 2 oder 3 können mehrere Sockelelemente relativ platzsparend, insbesondere nahezu lückenlos aneinander gereiht werden und kann dadurch insgesamt ein relativ großflächiges Fundament für ein einstückiges oder aus mehreren Modulen zusammengesetztes Automatengehäuse geschaffen werden. Insbesondere kann durch eine Aneinanderreihung oder durch eine zeilen- oder spaltenweise Anordnung von Sockelelementen ein an die Grundfläche des jeweiligen Automatengehäuses angepasstes Fundament relativ rasch und mit ausreichend hoher Tragfähigkeit aufgebaut werden. Das metallische Tragelement erfüllt dabei neben seiner Tragfunktion auch eine Verkleidungsfunktion für den Betonkörper, sodass auch ein verbessertes bzw. ansprechendes Erscheinungsbild gewährleistet ist und aufwändige Oberflächenbehandlungen des Betonkörpers erübrigt sind. Somit können auch durch diese Maßnahmen unter anderem die Herstellungskosten für das Fundamentsystem möglichst gering gehalten werden.

Durch die Maßnahmen gemäß Anspruch 4 kann ein leichtgewichtiges und dennoch relativ formstabiles Tragelement geschaffen werden, welches hohen Belastungen standhält, ohne kritischen Verformungen zu unterliegen. Darüber hinaus kann ein derartiges Tragelement relativ kostengünstig geschaffen werden. Ein weiterer Vorteil dieser Ausführung liegt darin, dass neben der Tragfunktion auch eine Verblendungsfunktion erfüllt wird. Insbesondere können dadurch die Betonflächen des Betonsockels zumindest teilweise verdeckt werden, sodass auch hohen ästhetischen Ansprüchen in kostengünstiger Art und Weise Rechnung getragen wird.

Durch die Maßnahmen gemäß Anspruch 5 kann der Betonkörper trotz möglichst großflächiger bzw. relativ weitläufiger Grund- bzw. Stellfläche, durch welche die Standfestigkeit deutlich verbessert wird, relativ leichtgewichtig ausgeführt werden. Insbesondere kann dadurch auch bei einem Betonkörper, welcher eine Stellfläche von bis zu 1 m² aufweist, eine maximale Gesamtmasse erzielt werden, die es ermöglicht, eine Manipulation des Betonkörpers durch lediglich einen Monteur oder durch zwei bis maximal vier Personen zu bewerkstelligen. Außerdem kann dieser Hohlraum in vorteilhafter Art und Weise zur Verteilung bzw. Unterbringung von Leitungsverbindungen, insbesondere von Kabelanschlüssen, genutzt werden.

Von besonderem Vorteil sind auch die Maßnahmen gemäß Anspruch 6, da dadurch die Errichtungszeiten für Selbstbedienungsautomaten, welche vor allem im Outdoor-Bereich aufzustellen sind, drastisch reduziert werden können. Häufig kann die komplette Errichtung eines Selbstbedienungsautomaten sogar innerhalb weniger Stunden abgeschlossen werden, sodass die entsprechende Automateninstallation nunmehr auch für temporäre Verwendungszwecke geeignet ist bzw. wirtschaftlich wird. Insbesondere ist es nicht mehr erforderlich, die Aushärtungszeiten von Beton zu berücksichtigen. Darüber hinaus werden dadurch aufwändige Standortherstellungen vermieden. Außerdem ist eine Koordination einer Mehrzahl von unterschiedlichen Professionisten, welche beispielsweise für Erdarbeiten, Schalungsarbeiten und Betonierarbeiten erforderlich wären, völlig erübrigt. Die jeweils vorgefertigten Betonkörper können nämlich an Ort und Stelle positioniert werden und können sodann die jeweiligen Gehäuse des Selbstbedienungsautomaten darauf abgestellt werden. Ein weiterer Vorteil liegt darin, dass auch ein allfälliger Rückbau des Automatenfundaments in einfacher und kostengünstiger Art und Weise ermöglicht ist. Im Gegensatz zu Betonfundamenten, welche im Bodenaufbau bzw. im Erdreich verankert sind, sind die erfindungsgemäßen Sockelelemente bei Erfordernis wesentlich einfacher entfernbar und an einem anderen Ort gegebenenfalls wieder verwendbar. Auch der Zeitraum für eventuell notwendige Sperren von Baustellenabschnitten im Bereich von öffentlichen Plätzen, wie zum Beispiel Fußgängerzonen, oder im Bereich von öffentlichen Gebäuden, kann durch den Einsatz der vorgefertigten Betonkörper für die Sockelelemente minimiert werden. Auch eine spätere Erweiterung eines Automaten oder ein Standortwechsel eines Automaten ist mit vergleichsweise geringen Aufwänden möglich.

Von besonderem Vorteil ist weiters eine Maßnahme gemäß Anspruch 7, da dadurch auch eine ausschließlich manuelle Handhabung, insbesondere eine händische Verlegung, ermöglicht ist. Zweckmäßigerweise ist dabei der Betonkörper durch zumindest einen Monteur, bevorzugt durch zwei bis vier Personen anheb- bzw. tragbar. Mit einfachen Hilfsmitteln, beispielsweise einem Palettenwagen oder Sackkarren, können dabei auch abgelegene bzw. für Kraftfahrzeuge grundsätzlich nicht befahrbare Standorte erreicht werden. Außerdem können durch diese Maßnahmen auch Stufen relativ problemlos überwunden werden. Letztendlich werden dadurch Standorte erreicht, welche mit Fahrzeugen oder Lastenkränen nicht oder nur mit sehr hohem Vorbereitungsaufwand und dementsprechendem Kostenaufwand erreichbar wären. Darüber hinaus ist von Vorteil, dass die jeweiligen Installationen bzw. Montagen unabhängig von Tageszeiten und auch unabhängig von Verfügbarkeitszeiträumen von Transport- oder Kranunternehmen vorgenommen werden können.

Von Vorteil ist auch die Ausgestaltung nach Anspruch 8, da dadurch eine rasche und letztendlich möglichst kostengünstige Ausnivellierung der Stand- bzw. Abstützfläche für den Selbstbedienungsautomaten geschaffen ist. Durch Ausbildung von zumindest drei, üblicherweise jedoch von vier verteilt angeordneten Stellelementen, deren Stützhöhe bedarfsweise justierbar ist, können auch relativ starke Neigungen bzw. windschiefe Platzierungen des Betonkörpers optimal ausgeglichen werden.

Ein besonders zuverlässiges, robustes und einfach zu bedienendes Stellelement ist in Anspruch 9 angegeben. Außerdem weist ein derartiges Stellelement eine hohe Bedienungssicherheit auf, nachdem vor allem bei einem selbsthemmend ausgeführten Gewindestift bzw. einem Gewindestift mit ausreichend kleiner Steigung eine zusätzliche Sicherungsmaßnahme erübrig ist. Insbesondere können dadurch auch bei Unachtsamkeiten des Monteurs bzw. der Wartungsperson keine unbeabsichtigten Verstellungen des Stellelementes auftreten.

Von Vorteil ist auch eine Maßnahme gemäß Anspruch 10, da dadurch jener Abschnitt des Gewindestiftes, welcher als Einstellbereich zur Verfügung steht, relativ zum Betonkörper justiert wird, sodass innerhalb des Automatengehäuses keinerlei Freiraum bzw. Bewegungsabschnitt für den Gewindestift vorzusehen ist. Insbesondere kann durch Veränderung der Einschraubtiefe des Gewindestiftes gegenüber dem Betonkörper die Stell- bzw. Stützhöhe des Gewindestiftes bzw. des Stellelementes in Bezug auf den Untergrund innerhalb eines relativ großen Einstellbereiches bedarfsweise verändert werden.

Von Vorteil ist auch eine Weiterbildung nach Anspruch 11, da dadurch eine relativ großflächige Abstützung für das Tragelement geschaffen ist und auch bei schiefwinkelig aufgestellten Betonkörpern eine definierte Abstützung des Tragelementes gegenüber dem Betonkörper, insbesondere gegenüber den Gewindestiften, geschaffen ist.

Bei der Ausgestaltung nach Anspruch 12 ist von Vorteil, dass eine stabile und definierte Abstützung für das Tragelement gegenüber dem wenigstens einen Gewindestift geschaffen ist. Darüber hinaus können dadurch die jeweils benötigten Drehwinkelstellungen der Gewindestifte stufenlos eingestellt werden und ist in jeder dieser Drehwinkelstellungen eine horizontale bzw. waagrechte Ausrichtung des Abstützkopfes gegenüber einem geneigten bzw. schiefwinkelig ausgerichteten Gewindestift erzielbar.

Eine besonders robuste und zugleich besonders kostengünstige Aufbauart für eine Gelenksverbindung zwischen dem Gewindestift und dem Abstützkopf ist in Anspruch 13 und/oder 14 angegeben.

Die Ausgestaltung gemäß Anspruch 15 ergibt ein robustes und auch langfristig funktionsstabiles Federelement. Außerdem können dadurch bei relativ kleinem Aufbauvolumen definierte Feder- bzw. Rückstellkräfte aufgebaut werden. Außerdem sind diese Federelemente in Längsrichtung zum Gewindestift relativ starr bzw. unnachgiebig, sodass unerwünschte bzw. belastungsbedingte Vertikalverstellungen der Abstützfläche hintan gehalten sind.

Von Vorteil ist auch eine Maßnahme gemäß Anspruch 16, da dadurch Spaltbildungen zwischen der Oberkante des Betonsockels und der Unterkante des Verblendungselementes vermieden werden. Zum einen wird dadurch ein vorteilhaftes, optisches Erscheinungsbild gewährleistet und die Ansammlung von Müll oder von sonstigen Gegenständen innerhalb des Sockelelementes vermieden. Außerdem wird ein Schutz vor der Einnistung von Nagetieren oder sonstigen Tieren erzielt. Ein weiterer Vorteil liegt darin, dass sich die Verblendung des Betonkörpers automatisch an die jeweiligen Einstellungen anpasst und eine manuelle Bearbeitung bzw. ein nachträglicher Zuschnitt des Verblendungselementes erübrigt ist. Insbesondere passt sich das Verblendungselement bei Justierarbeiten in Bezug auf das Sockel- bzw. Abstützniveau gegenüber der Oberkante des Betonkörpers automatisch an, sodass Nachbearbeitungen am frontseitigen bzw. rückseitigen Verblendungselement des Sockelelementes erübrigt werden können.

Eine besonders vorteilhafte Ausführungsform eines Fundamentsystems ist in Anspruch 17 angegeben. Der entsprechende Automatentyp ist zweckmäßigerweise modular aufgebaut. In vorteilhafter Art und Weise kann das erfindungsgemäße Fundamentsystem in Bezug auf einen solchen, modular zusammenstell- bzw. ergänzbaren Aufbewahrungsautomaten problemlos nachgeführt, insbesondere in einfacher Art und Weise erweitert und gegebenenfalls auch rückgebaut oder reduziert werden.

Durch die Maßnahmen gemäß Anspruch 18, insbesondere durch die baugleiche Ausführung der Sockelelemente, kann jederzeit bzw. je nach Bedarf eine Erweiterung oder Reduzierung des Fundamentsystems vorgenommen werden. Insbesondere sind keine eigenständigen End- oder Abschlusselemente vorgesehen, sodass das Fundamentsystem ausgehend von einem oder von beiden Endabschnitten bei Bedarf problemlos erweitert und gegebenenfalls auch verkürzt werden kann.

Von Vorteil ist es auch, wenn einander gegenüberliegende Seitenwände des Betonkörpers in Bezug auf deren Außenflächen ausgehend vom Bodenabschnitt des Betonkörpers in Richtung zu dessen oberen Endabschnitt bis zu einer ersten Horizontalebene leicht divergierend verlaufen und anschließend leicht konvergierend verlaufen, sodass in Bezug auf einen Vertikalschnitt durch die Seitenwände deren Außenflächen jeweils bombiert sind oder zumindest zwei stumpfwinkelig zueinander ausgerichtete Teilflächen aufweisen, da dadurch auch bei benachbarten Sockelelementen, welche auf jeweils unterschiedlich geneigten Ebenen platziert sind, eine in Bezug auf den Übergangsabschnitt spaltfreie Aneinanderreihung ermöglicht ist. Beispielsweise ist auch dann, wenn ein erstes Sockelelement ebenflächig bzw. horizontal ausgerichtet ist und ein daran anschließendes Sockelelement geneigt ausgerichtet ist, eine möglichst spaltlose Aneinanderreihung auf Höhe einer ersten Horizontalebene des Sockelelementes, welche Horizontalebene bevorzugt mit dem Niveau der begehbaren Fläche bzw. der Trittfläche eines begehbaren Vorplatzes zumindest annähernd übereinstimmt, ermöglicht. Insbesondere können sich dadurch benachbarte Sockelelemente bzw. deren Betonkörper in definierter Weise gegenseitig stützen, sodass eine verbesserte Stabilität, insbesondere eine hohe Wackelsicherheit des Fundamentsystems erzielt ist. Dies wird vor allem auch dadurch begünstigt, dass benachbarte Sockelelemente, insbesondere deren Betonkörper, mit geeigneten Spannmitteln, bevorzugt mittels Verbindungsschrauben, zueinander etwas vorgespannt werden können.

Von Vorteil sind auch die Maßnahmen gemäß Anspruch 19, da dadurch ein entsprechendes Gehäusemodul zuverlässig und stabil aufgenommen werden kann. Darüber hinaus wird die Montage des Gehäusemoduls auf dem plattenartigen Tragelement wesentlich vereinfacht.

Bei der Ausgestaltung nach Anspruch 20 ist von Vorteil, dass das Tragelement möglichst leichtgewichtig aufgebaut werden kann und dennoch in jenen Bereichen, in denen eine stabile Stützwirkung für das Gehäusemodul erforderlich ist, die entsprechenden Abstützflächen bietet. Ein wesentlicher Zweck liegt auch darin, dass dadurch ein großzügiger Zugang in den Sockelabschnitt eines Selbstbedienungsautomaten geschaffen wird, der eine mühelose und zugleich gut geschützte Verkabelung zwischen einem Steuerungsmodul und wenigstens einem Fachmodul eines Aufbewahrungsautomaten ermöglicht. Über Durchbruchsstellen in den Seitenwänden der Betonkörper kann sodann zwischen Nachbarmodulen eines Selbstbedienungsautomaten beispielsweise die Stromversorgung oder Steuerungsverbindung geführt werden. Zudem kann in diesem Sockelabschnitt eine gegebenenfalls erforderliche Telefon- oder Netzwerkverbindung relativ rasch und einfach untergebracht und zugleich besonders sicher vor unbefugtem Zugriff geschützt werden, ohne dass zusätzliche Komponenten erforderlich sind.

Von besonderem Vorteil sind auch die Maßnahmen gemäß Anspruch 21, da dadurch ein Verbundkörper geschaffen wird, welcher eine hohe Standfestigkeit besitzt. Insbesondere kann durch die Bewegungskopplung zwischen den einzelnen Betonkörpern eine möglichst hohe, zusammenhängende Masse geschaffen werden, welche die Standfestigkeit für den Selbstbedienungsautomaten deutlich erhöht. Dadurch wird auch erhöhten Sicherheitsanforderungen Rechnung getragen und kann eine Verankerung der Betonkörper im Untergrund zumeist erübrigt werden. Insbesondere kann dadurch auch bei hohen Windlasten bzw. auch bei erhöhten Andrückkräften gegenüber den Wandabschnitten des Selbstbedienungsautomaten eine ausreichend hohe Standfestigkeit erzielt werden. Außerdem wird dadurch das Risiko einer Beschädigung von unterirdisch geführten Leitungen ausgeschaltet, da eine tiefe bzw. in den Bodenaufbau integrierte Fundamentierung oder Verankerung nicht erforderlich ist.

Von Vorteil ist es auch, wenn ein schrankartig ausgebildetes Gehäusemodul auf einem ersten Sockelelement lastübertragend abgestützt ist, welches Gehäusemodul in Bezug auf ein benachbart angeordnetes, im Wesentlichen spaltlos angereihtes und auf einem weiteren Sockelelement abgestütztes, schrankartiges Gehäusemodul lose aneinandergereiht ist und somit gegenüber dem angereihten Gehäusemodul relativbeweglich ist, da dadurch die Gehäuse- bzw. Fachmodule unabhängig voneinander aneinander gereiht werden können. Insbesondere wird dabei durch eine gegebenenfalls vorzunehmende Justierung der vertikalen Ausrichtung bzw. der geometrischen Abmessungen der Gehäusemodule, insbesondere in Bezug auf die Rechtwinkeligkeit der einzelnen Gehäusemodule, ein benachbartes Gehäusemodul nicht beeinflusst. Insbesondere wird eine direkte bzw. zwangsweise Kraftübertragung von einem Fachmodul auf ein benachbartes Fachmodul und damit eine mögliche Verspannung und Verwindung der Modulgehäuse verhindert. Dadurch werden die Einstellzeiten reduziert und können darüber hinaus exakte, die plangemäße Geometrie erfüllende Montagen von Gehäusemodulen, insbesondere von Fachmodulen, erzielt werden.

Von Vorteil sind auch die Maßnahmen gemäß Anspruch 22, da eine Seil- oder Stangenverbindung einfach an die jeweils benötigte Länge bzw. Breite des Pflaster- und Sockelfundamentes angepasst werden kann.

Von Vorteil ist es auch, wenn die Seil- oder Stangenverbindung durch Gewindeabschnitte bedarfsweise verlänger- und verkürzbar ist, da dadurch mit relativ kurzen Teilabschnitten die Montage des Fundamentsystems erleichtert werden kann. Insbesondere kann durch bedarfsweise Verlängerung oder Verkürzung der Seil- oder Stangenverbindung die jeweils gewünschte Vorspann- bzw. Verbindungslänge geschaffen werden, ohne dass mit unhandlichen bzw. einen hohen Platzbedarf erfordernden Stangenelementen zu hantieren ist.

Durch die Maßnahmen gemäß Anspruch 23 wird ein verbesserter Zusammenhalt zwischen den jeweils aneinander gereihten Pflasterungselementen erzielt.

Von Vorteil ist es weiters, wenn die Plattenverbindung zwischen benachbarten Pflasterungselementen mittels zumindest einem Leistenelement aus Beton verdeckbar ist und das wenigstens eine Leistenelement gegenüber den Pflasterungselementen aus Beton gegen Abdriften gesichert ist, insbesondere mit wenigstens einem Pflasterungselement verbunden ist, da dadurch in einfacher Art und Weise eine Anlaufschräge für ein vereinfachtes Befahren oder Begehen der Pflasterungselemente geschaffen werden kann. Außerdem können dadurch die Plattenverbindungen verdeckt werden, sodass sie für Vandalenakte nicht oder nur mit erhöhtem Aufwand zugänglich sind.

Von Vorteil ist auch die Ausgestaltung nach Anspruch 24, da dadurch auch bei relativ unebenen bzw. welligen Geländeverläufen eine möglichst spaltfreie Aneinanderreihung der einzelnen Pflasterungselemente geschaffen werden kann.

Von besonderem Vorteil sind auch die Maßnahmen gemäß Anspruch 25, da dadurch relativ unabhängig von der Festigkeit des Untergrundes eine hohe Standsicherheit für den Selbstbedienungsautomaten geschaffen werden kann. Darüber hinaus können möglichst kurze Errichtungszeiten erzielt werden.

Von Vorteil ist auch, wenn in zumindest einem Pflasterungselement wenigstens ein Beleuchtungskörper eingebaut ist, der zur Beleuchtung des Umgebungsbereiches eines Selbstbedienungsautomaten und/oder zur Beleuchtung der Frontseite oder des Innenraums von geöffneten Aufnahmefächern eines Aufbewahrungsautomaten ausgebildet ist. Nachdem der aus Betonplatten gebildete Vorplatz des Selbstbedienungsautomaten ein fixer Bestandteil des Automaten ist, können in die Betonplatten mit nur minimalem Installationsaufwand auch bereits geeignete Beleuchtungskörper zur Ausleuchtung des Automaten bzw. seiner Fächer integriert werden. Solche bodenseitigen Beleuchtungskörper ergeben eine gute Ausleuchtung und kann durch diese Maßnahme zumindest in manchen Fällen auf eine aufwändige Vordachkonstruktion mit Beleuchtungselementen verzichtet werden, sodass die aufzuwendenden Gesamtkosten weiter gesenkt werden können. Außerdem sind die bodenseitigen Beleuchtungskörper als zusätzliches gestalterisches Element nutzbar.

Ferner sind die Maßnahmen gemäß Anspruch 26 vorteilhaft und/oder ist es vorteilhaft, wenn der Hohlraum des wenigstens einen Betonkörpers einen Aufnahme- oder Verlegungsraum für Leitungsverbindungen, insbesondere für Kabelverbindungen zwischen aneinander gereihten Gehäusemodulen und/oder zwischen wenigstens einem Gehäusemodul und einem Steuerungsgehäuse ausbildet, da dadurch eine einfache und rasch herstellbare Verbindung zwischen benachbarten Sockelelementen aufgebaut werden kann und nachfolgend ein großzügiger und stabiler Installationskanal für Leitungsverbindungen zur Verfügung steht.

Von Vorteil ist auch die Ausgestaltung, nach welcher das Tragelement mit einem darauf abgestützten Gehäusemodul eines Selbstbedienungsautomaten ablösungssicher verbindbar, insbesondere verschraubbar ist, da dadurch ein unerwünschtes Herunterfallen eines Gehäusemoduls vom Fundamentsystem ausgeschlossen werden kann.

Weiters ist eine Ausgestaltung von Vorteil, bei welcher das metallische Tragelement gegenüber dem wenigstens einen Stellelement, insbesondere gegenüber dessen Abstützkopf, mittels einer translatorisch justierbaren Verbindung justierbar, insbesondere seitlich verstellbar ist, und/oder bei welcher das Tragelement via wenigstens ein Langloch und via wenigstens eine damit korrespondierende Schraubverbindung mit dem Stellelement, insbesondere mit dem Abstützkopf verbunden ist, da dadurch auch bei variierendem Gelände bzw. bei welligem oder stark uneinheitlichem Untergrund oder bei Toleranzen in der Verlegung der Sockelelemente ein möglichst gleichmäßiges bzw. einheitliches Spaltmaß zwischen aneinander gereihten Tragelementen und somit auch zwischen aneinander gereihten Gehäusemodulen erzielt werden kann. Dadurch kann eine hohe Montagequalität bzw. eine hohe Präzision der Installation erzielt werden.

Schließlich ist eine Ausführung vorteilhaft, bei welcher ein Bodenabschnitt oder eine Bodenplatte des wenigstens einen Gehäusemoduls wenigstens eine Öffnung aufweist, durch welche auch bei einem auf dem Tragelement befestigten Gehäusemodul die Einstellvorrichtung und/oder eine translatorisch justierbare Verbindung ausgehend vom Inneren des Gehäusemoduls zugreifbar und bedienbar ist, da dadurch auch nach der Montage des Gehäusemoduls auf dem jeweiligen Sockelelement jederzeit eine Neu- bzw. Nachjustierung der Ausrichtung des Gehäusemoduls vorgenommen werden kann. Insbesondere für einen allfälligen Ausgleich einer eventuellen Absenkung einzelner Sockelelemente infolge von Setzungen des Untergrunds ist diese Ausgestaltung besonders zweckmäßig. Vor allem werden dadurch Wartungs- bzw. Servicearbeiten erleichtert, nachdem eine Demontage des Gehäusemoduls nicht erforderlich ist.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Selbstbedienungsautomaten, welcher auf einem erfindungsgemäß ausgebildeten Fundamentsystem abgestützt ist, in perspektivischer Darstellung;
- Fig. 2: das Fundamentsystem gemäß Fig. 1 ohne dem Selbstbedienungsautomaten;
- Fig. 3: ein justierbares Sockelelement des Fundamentsystems in seiner maximal abgesenkten Stellung;
- Fig. 4: das Sockelelement gemäß Fig. 3 in seiner maximal angehobenen Stellung;
- Fig. 5: das Sockelelement gemäß Fig. 4 in einem teilweise zerlegten Zustand, insbesondere in einem Zustand, in welchem das Tragelement vom Betonkörper abgenommen ist;
- Fig. 6-8: verschiedene Ansichten eines Stellelementes des Sockelelementes;
- Fig. 9: ein aus zumindest einem Sockelelement und aus zumindest zwei Pflasterungselementen zusammengesetztes Fundamentsystem im Vertikalschnitt;
- Fig. 10: das Fundameritsystem gemäß Fig. 9 in Draufsicht;
- Fig. 11: zwei aneinander gereihte Sockelelemente bzw. Betonkörper des Fundamentsystems im Vertikalschnitt;
- Fig. 12a, b: einen Selbstbedienungsautomaten in Verbindung mit dem erfindungsgemäßen Fundamentsystem auf einem schiefwinkeligen Untergrund;
- Fig. 13a, b: eine mehrfache Aneinanderreihung von Gehäusemodulen eines Selbstbedienungsautomaten in Verbindung mit dem erfindungsgemäßen Fundamentsystem auf einem schiefwinkeligen Untergrund.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw., auf die unmittelbar beschriebene sowie dargestellte Figur bezogen und sind diese Lageangaben bei einer Lageänderung sinngemäß auf die neue Lage zu übertragen. Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

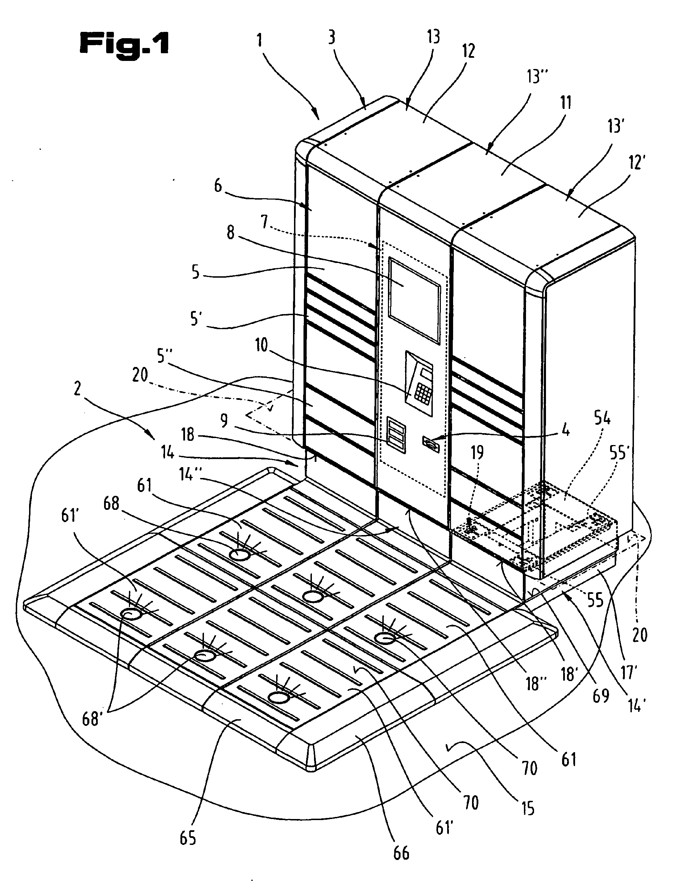

Fig. 1 zeigt eine beispielhafte Ausführungsform eines Selbstbedienungsautomaten 1 in Verbindung mit einem erfindungsgemäß ausgebildeten Fundamentsystem 2. Dieser beispielhaft dargestellte Selbstbedienungsautomat 1 ist als Aufbewahrungsautomat 3 zur vorübergehenden Deponierung einer Mehrzahl von Waren bzw. Gegenständen vorgesehen, welche vom jeweiligen, bestimmungsgemäßen Empfänger rund um die Uhr abholbar sind. Dieser Aufbewahrungsautomat 3 ist mit einer Schließfachanlage vergleichbar, weist jedoch im Gegensatz zu einer herkömmlichen Schließfachanlage wenigstens eine Identifizierungsvorrichtung 4 zur Identifizierung bzw. Berechtigungsüberprüfung eines Zustellers und/oder eines Empfängers von Waren bzw. Gegenständen auf. Die Identifizierungsvorrichtung 4 kann dabei durch eine Lesevorrichtung für Magnet- bzw. Chipkarten, für Transponder, für biometrische Erkennungsmerkmale und/oder durch sonstige, die entsprechende Kontroll- bzw. Überprüfungsfunktion erfüllende Mittel gebildet sein. Die Identifizierungsvorrichtung 4 stellt sicher, dass nur eine berechtigte Person, insbesondere ein berechtigter Zusteller oder Abholer von Waren bzw. Gegenständen Zugriff auf ein ausgewähltes bzw. bestimmtes Aufnahmefach 5, 5', 5" einer Fachanordnung 6 des Selbstbedienungsautomaten 1 erhält. Die Identifizierungsvorrichtung 4 ist somit auch als Mittel zur Berechtigungsüberprüfung zu verstehen bzw. zu bezeichnen, sodass eine Identifizierung im eigentlichen Sinn keineswegs zwingend erforderlich ist.

Die einzelnen, bevorzugt reihen- und spaltenweise angeordneten Aufnahmefächer 5, 5', 5" der Fachanordnung 6 sind, wie an sich bekannt, durch elektronisch angesteuerte Türen selektiv entriegelbar, um dadurch auf ein bestimmtes, verschlossenes Fach Zugriff zu erlangen. Diese Zugriffssteuerung bzw. Zugriffskontrolle erfolgt ausgehend von einer Steuerungsvorrichtung 7, welche zumindest teilweise im Aufbewahrungsautomaten 3 implementiert ist. Die Steuerungsvorrichtung 7 kann dabei auch als Teilkomponente eines verteilen bzw. dezentralen Steuerungssystems ausgeführt sein. Zur Umsetzung der jeweils erforderlichen Abläufe bzw. zur Interaktion mit einem Benutzer weist der Aufbewahrungsautomat 3 weiters wenigstens eine Ein- und/oder Ausgabevorrichtung 8, beispielsweise einen Touch-Screen, auf. Darüber hinaus kann ein solcher Aufbewahrungsautomät 3 ein Identifikationsmittel 9 für Waren bzw. Gegenstände, beispielsweise in Art eines Barcode-Scanners oder einer Transponder-Lesevorrichtung, aufweisen. Entsprechend einer vorteilhaften Variante ist weiters ein Bezahlungsmodul 10 vorgesehen, welches eine bevorzugt bargeldlose Entrichtung von Gebühren für Waren und/oder Dienstleistungen ermöglicht. Je nach erforderlichem Funktionsumfang bzw. vorgesehenem Anwendungsgebiet kann der Aufbewahrungsautomat 3 bzw. Selbstbedienungsautomat 1 weniger und/oder andere Komponenten umfassen, welche die jeweils benötigten, technischen Funktionen implementieren.

Anstelle des beispielhaft dargestellten Aufbewahrungsautomaten 3 kann der Selbstbedienungsautomat 1 auch durch einen Bankdienstleistungsautomat oder durch einen Verkaufsautomat gebildet sein. Der jeweilige Selbstbedienungsautomat 1 ist bevorzugt an öffentlich zugänglichen Orten aufgestellt und entweder von einem theoretisch unbegrenzten, oder von einem für die Nutzung registrierten, eingeschränkten Personenkreis nutzbar.

Vor allem im Falle eines Selbstbedienungsautomaten 1 für Bankdienstleistungen weist ein solcher Automat zumeist ein einteiliges bzw. aus mehreren Einzelteilen zusammengesetztes, relativ starres bzw. in sich abgeschlossenes Gehäuse auf. In diesem einstückigen Gehäuse sind die jeweils benötigten, technischen Komponenten und Aufbewahrungsräume sowie die gegebenenfalls erforderlichen Betriebsmittel bzw. Waren oder Bezahlungsmittel untergebracht.

Gemäß einer vorteilhaften Variante ist der Selbstbedienungsautomat 1 modular aufgebaut bzw. modulartig zusammenstellbar, insbesondere bedarfsweise erweiterbar und gegebenenfalls auch reduzier- bzw. rückbaubar. Eine zweckmäßige Modularität des Selbstbedienungsautomaten 1, insbesondere eines Aufbewahrungsautomaten 3 sieht vor, dass ein Steuerungsgehäuse 11 ausgebildet ist, in welchem die primären, elektrotechnischen bzw. elektronischen Komponenten des Selbstbedienungsautomaten 1, wie zum Beispiel die Steuerungsvorrichtung 7, insbesondere ein Steuerungsrechner, die Ein- und/oder Ausgabevorrichtung 8, insbesondere ein Touch-Screen, und gegebenenfalls eine Identifikationsvorrichtung 4 untergebracht sind. Dieses modulare Steuerungsgehäuse 11 ist mit wenigstens einem weiteren Gehäusemodul 13, 13', 13", beispielsgemäß mit wenigstens einem eine Mehrzahl von Aufnahmefächern 5, 5', 5" aufweisenden Fachmodul 12, 12' kombinierbar. Beispielsgemäß ist zwischen zwei Fachmodulen 12, 12', welche jeweils eine Mehrzahl von Aufnahmefächern 5 bi 5" umfassen, das im Wesentlichen eigenständig ausgebildete, modular einfüg- bzw. anreihbare Steuerungsgehäuse 11 angeordnet. Selbstverständlich ist es auch möglich, lediglich ein Fachmodul 12 vorzusehen, oder alternativ mehr als zwei Fachmodule 12, 12' auszubilden. Die Position des Steuerungsgehäuses 11 innerhalb der jeweiligen Anzahl und Anordnung der Fachmodule 12, 12' ist dabei beliebig.

Je nach Automatentype kann der Selbstbedienungsautomat 1 anstelle von wenigstens einem Fachmodul 12, 12' auch andersartige Gehäusemodule 13, 13', 13" aufweisen. Beispielsweise kann der Selbstbedienungsautomat 1 zumindest ein Gehäusemodul 13, 13' zur Deponierung von auszugebenden und/oder zugeführten Bezahlungsmitteln bzw. Banknoten aufweisen sowie ein daran angereihtes Gehäusemodul 13" umfassen, in welchem die steuerungstechnischen Komponenten, insbesondere die Steuerungsvorrichtung 7 und die Ein- und/oder Ausgabevorrichtung 8, integriert sind. Entsprechend einer vorteilhaften Ausführungsform sind die zu einem Gesamtsystem zusammensetzbaren, insbesondere lückenlos aneinander reihbaren Gehäusemodule 13, 13', 13" unabhängig von ihrer technischen Funktionalität mit jeweils gleichem oder annährend gleichem Aufbauvolumen ausgeführt. Insbesondere ist eine Grund- bzw. Querschnittsfläche der einzelnen Gehäusemodule 13-13" bevorzugt gleich oder annährend gleich bemessen. Das heißt, dass die Grundflächen bzw. die Tiefen- und Breitenabmessungen der einzelnen Gehäusemodule 13, 13', 13" jeweils gleich oder annähernd gleich bemessen sind.

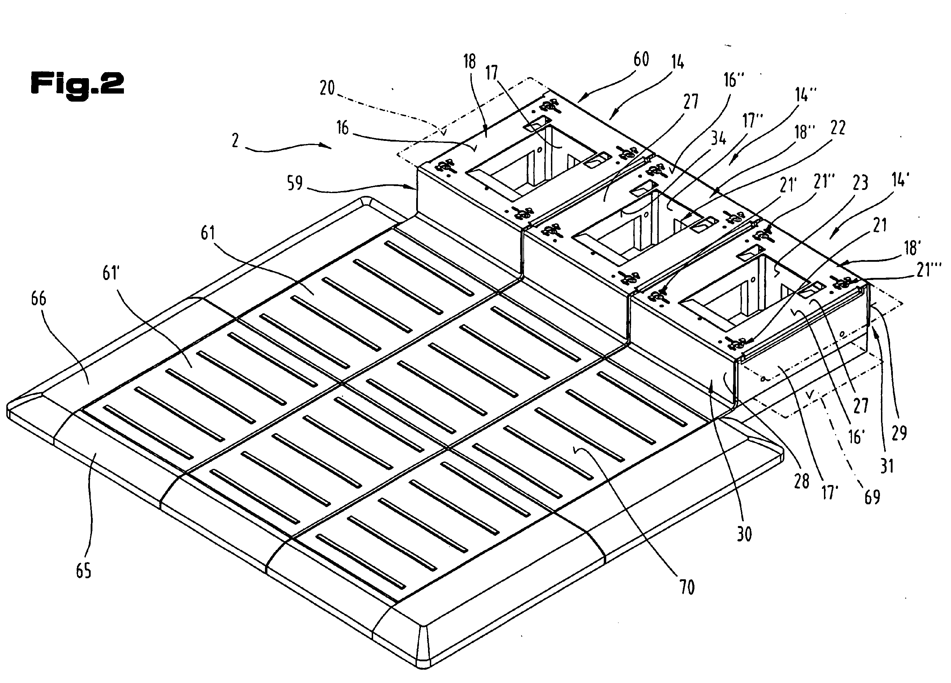

Wie am besten aus einer Zusammenschau der Fig. 1 und 2 ersichtlich ist, ist das jeweilige Automatengehäuse oder wenigstens ein Gehäusemodul 13, 13', 13" eines modular aufgebauten Selbstbedienungsautomaten 1 via wenigstens ein Sockelelement 14, 14', 14" gegenüber dem jeweiligen Bodenbereich bzw. Untergrund 15 lastübertragend abgestützt. Vor allem bei einem modulartigen Ausbau, insbesondere bei einem modular erweiterbaren Selbstbedienungsautomaten 1, ist je erforderlichem Gehäusemodul 13, 13', 13" jeweils ein Sockelelement 14, 14', 14" vorgesehen, wie dies in Fig. 1 schematisch veranschaulicht wurde. Das heißt, dass je Gehäusemodul 13, 13', 13" bevorzugt jeweils ein entsprechend zugeordnetes Sockelelement 14, 14', 14" ausgebildet ist.

Je Sockelelement 14, 14', 14" ist jeweils wenigstens eine Abstützebene bzw. Abstützfläche 16,16', 16" für ein Automatengehäuse bzw. für wenigstens ein Gehäusemodul 13, 13', 13" des Selbstbedienungsautomaten 1 ausgebildet. Diese Abstützfläche 16, 16', 16" ist gegenüber dem Untergrund 15 im Wesentlichen podestartig erhaben angeordnet und zumindest annährend ebenflächig bzw. plan ausgeführt. Zumindest Teilabschnitte dieser Abstützfläche 16, 16', 16" stützen das jeweilige Gehäuse bzw. Gehäusemodul 13, 13', 13" derart ab, dass eine möglichst senkrechte Ausrichtung des jeweiligen Gehäuses bzw. der jeweiligen Gehäusemodule 13, 13', 13" des Selbstbedienungsautomaten 1 vorliegt. Insbesondere ist die Abstützfläche 16, 16', 16" zur lastübertragenden Aufnahme der Unterseite bzw. des Bodenabschnittes eines Gehäuses oder Gehäusemoduls 13, 13', 13" ausgebildet. Die wenigstens eine Abstützfläche 16, 16', 16" an der Oberseite des jeweiligen Sockelelementes 14, 14', 14" gewährleistet, dass der Selbstbedienungsautomat 1 ordnungsgemäß ausgerichtet ist, insbesondere möglichst senkrecht steht, und dass eine stabile Aufstellung bzw. eine gegen Umfallen oder allmähliches Neigen gesicherte Position vorliegt. Die jeweiligen Sockelelemente 14, 14', 14" gewährleisten also eine ausreichende Standfestigkeit und eine bestimmungsgemäße Orientierung bzw. Ausrichtung für das Gehäuse bzw. die einzelnen Gehäusemodule 13, 13', 13" eines Selbstbedienungsautomaten 1.

Entsprechend einer besonders zweckmäßigen Maßnahme umfasst das wenigstens eine Sockelelement 14, 14', 14" jeweils zumindest einen Betonkörper 17, 17', 17" und jeweils wenigstens ein darauf abgestütztes, metallisches Tragelement 18, 18', 18". Das jeweilige, metallische Tragelement 18, 18', 18" bildet an der Oberseite die jeweiligen Abstützflächen 16, 16', 16" für ein einstückiges Automatengehäuse oder für mehrere Gehäusemodule 13, 13', 13" eines Selbstbedienungsautomaten 1 aus.

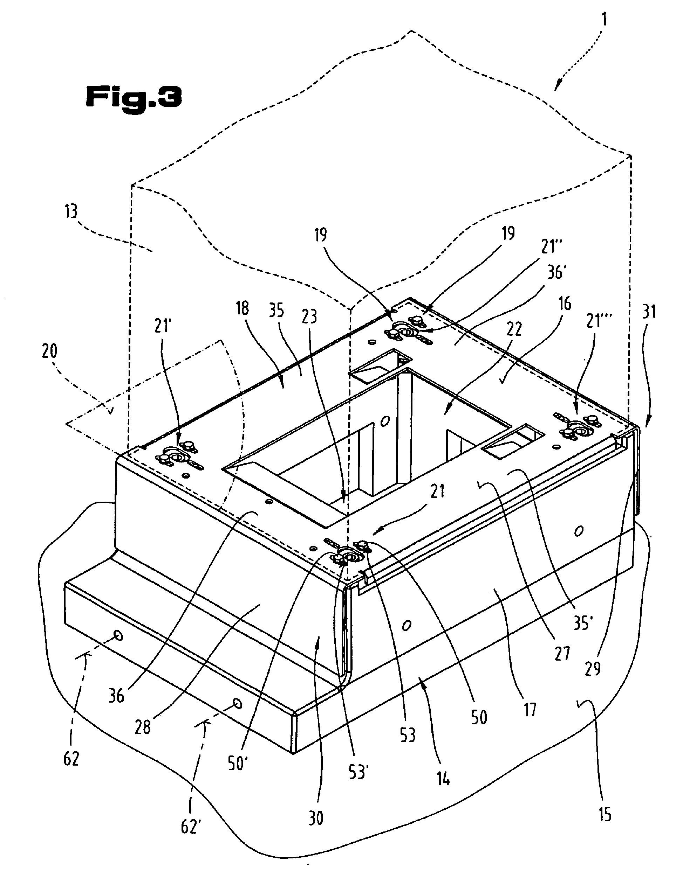

In den Fig. 3 bis 5 ist ein einzelnes Sockelelement 14 veranschaulicht, welches zur sicheren Abstützung und zur ordnungsgemäßen bzw. lotrechten Ausrichtung von einem der Gehäusemodule 13, 13' oder 13" - Fig.1 - vorgesehen ist. Der Einfachheit wegen wird im Nachfolgenden lediglich auf eines der modulartig aneinander reihbaren Sockelelemente 14, 14', 14" Bezug genommen, nachdem die Sockelelemente 14, 14', 14" gemäß Fig. 1 jeweils baugleich ausgeführt sind.

Das metallische Tragelement 18 zur lastabtragenden Aufnahme eines beispielsweise schrank- oder kastenförmig ausgebildeten Gehäusemoduls 13 ist dabei mittels wenigstens einer Einstellvorrichtung 19 in Bezug auf den Betonkörper 17 des Sockelelementes 14 justierbar, insbesondere ausnivellierbar. Das heißt, dass der Betonkörper 17 innerhalb eines bestimmten Ausmaßes schief bzw. geneigt angeordnet, insbesondere auf einem abschüssigen Untergrund 15 abgestellt sein kann, und dass das metallische Tragelement 18 durch Justierarbeiten an zumindest einer Einstellvorrichtung 19 derart ausnivellierbar ist, dass eine horizontale oder möglichst horizontale Abstützebene 20 für ein Gehäuse oder Gehäusemodul 13 eines Selbstbedienungsautomaten 1 vorliegt. Insbesondere ist es trotz einer allfälligen Aufstellung des Sockelelementes 14 auf einem unebenen und/oder abschüssigen Untergrund 15 ermöglicht, die Abstützebene 20, insbesondere das Tragelement 18, durch manuelle Bedienung der wenigstens einen Einstellvorrichtung 19 derart auszurichten, dass ein darauf abzustellendes bzw. abzustützendes Gehäusemodul 13 plangemäß bzw. ordnungsgemäß, insbesondere lotrecht ausgerichtet ist bzw. ausgerichtet werden kann.

Das Sockelelement 14 des entsprechenden Fundamentsystems 2, insbesondere dessen Einstellvorrichtung 19, umfasst dabei wenigstens ein Stellelement 21, insbesondere zumindest drei, bevorzugt vier, in Vertikalrichtung manuell justierbare Stellelemente 21, 21', 21", 21"'. Mittels diesem wenigstens einen Stellelement 21 ist es ermöglicht, das metallische Tragelement 18 in eine horizontal ausgerichtete Relativstellung gegenüber dem Betonkörper 17 bzw. gegenüber dem Untergrund 15 zu verbringen. Bevorzugt sind zumindest drei solcher manuell justierbarer Stellelemente 21, 21', 21" vorgesehen. Beispielsgemäß sind vier Stellelemente 21-21'" ausgebildet, wobei an jeder Ecke des in Draufsicht im Wesentlichen quadratischen Tragelementes 18 jeweils ein manuell justierbares Stellelement 21, 21', 21", 21'" ausgebildet ist. Eine Mindestanzahl von drei Stellelementen 21, 21', 21", welche dabei in einer Dreiecksanordnung positioniert sind, ist zweckmäßig, um ausgehend von einem schiefwinkelig bzw. geneigt aufgestellten Betonkörper 17 eine möglichst stabile und ausreichend horizontal bzw. waagrecht verlaufende Abstützebene 20 für ein Gehäusemodule 13 zu erzielen.

Der Betonkörper 17 des Sockelelementes 14 ist vorzugsweise als Fertigbauteil ausgeführt, der am vorgesehenen Aufstellungsort des Selbstbedienungsautomaten 1 positioniert bzw. abgestellt wird. Insbesondere wird der Betonkörper 17 mittels einer Gießform hergestellt, indem Fließbeton, insbesondere ein Gemisch aus Gesteinskorn und Zement, in eine entsprechende Gießform eingegossen wird. Nach ausreichender Aushärtung wird dieser Formkörper aus der Gießform entnommen bzw. entformt und nach Erreichung einer ausreichenden Endhärte wird dieser Betonkörper 17 als vorgefertigte Teilkomponente für das Sockelelement 14 bereitgestellt. Die Masse des Betonkörpers 17 ist vorzugsweise derart gewählt, dass eine Manipulation, insbesondere eine Verlegung, ohne maschinelle Hilfsmittel möglich ist. Das heißt, dass die Masse des Betonkörpers 17 ausreichend gering sein soll, um ohne maschinelle Hebe- oder Transportmittel, d.h. ohne Kranarbeiten, am jeweils gewünschten Aufstellungsort positioniert werden zu können. Insbesondere ist eine manuelle Verlegbarkeit und Tragbarkeit des Betonkörpers 17 für ein Sockelelement 14 vorteilhaft. Die Verwendung eines manuell verfahrbaren Palettenhebers oder eines Sackkarrens ist dabei nicht als maschinelles Hilfsmittel zu verstehen.

Die Masse des Betonkörpers 17 beträgt vorzugsweise weniger als in etwa 120 kg, um somit durch zwei bis vier Personen manuell verfrachtet bzw. getragen werden zu können. Vorzugsweise weist der Betonkörper 17 eine Masse zwischen 30 kg bis 90 kg, insbesondere in etwa 60 kg auf. Dies ermöglicht eine Manipulation ohne dem Erfordernis von maschinellen Hilfsmitteln in Form von Kränen bzw. Kranfahrzeugen oder Gabelstaplern. Der mit entsprechender Masse vorgefertigte Betonkörper 17 ist sodann zur unmittelbaren Platzierung am jeweiligen Aufstellungsort eines Selbstbedienungsautomaten 1 vorgesehen. Insbesondere ist eine zusätzliche Betonplatten- oder Streifenbeton-Fundamentierung für den Selbstbedienungsautomaten 1 nicht zwingend. Der entsprechend vorgefertigte Betonkörper 17 kann direkt auf einem herkömmlichen Schotter-, Asphalt- oder Steinboden abgestellt werden, wie dies vor allem dann der Fall ist, wenn der Selbstbedienungsautomat 1 im Außenbereich aufgestellt werden soll. Der Betonkörper 17 kann aber auch auf beliebigen Pflasterungen oder sonstigen Bodenbelägen im Innenbereich von Hallen oder Gebäuden abgestellt werden. Der Untergrund 15 muss lediglich ausreichend tragfähig sein, um ein allmähliches Einsinken und somit eine allmähliche, einseitige Neigung des jeweiligen Automatengehäuses hintan zu halten. Im Falle eines ausreichend tragfähigen Wiesen-Untergrundes oder Erdbodens ist es lediglich erforderlich, die relativ weiche Oberflächenschicht abzutragen und mittels einer ausreichend dicken Schotterbettung einen Untergrund 15 zu schaffen, auf welchem der vorgefertigte Betonkörper 17 oder eine Mehrzahl von aneinander gereihten Betonkörpern 17-17" direkt abgestellt werden kann. Daraufhin kann das Sockelelement 14 durch Anbringung des metallischen Tragelementes 18 rasch und einfach komplettiert werden. Alternativ ist es auch möglich, das Sockelelement 14 als vorab bereits zusammengebaute Einheit auszuführen, wobei das Sockelelement 14 den Betonkörper 17, das metallische Tragelement 18 sowie die Einstellvorrichtung 19 umfasst und in dieser Form zum jeweils gewünschten Aufstellungsort verbracht wird. Auch in diesem Fall soll die Masse des Sockelelementes 14 weniger als in etwa 120 kg betragen, um durch zwei bis vier Personen verleg- bzw. manipulierbar zu sein und um maschinelle Hilfsmittel erübrigen zu können.

Entsprechend einer vorteilhaften Ausführungsform ist der Betonkörper 17 annähernd hohlprismatisch ausgebildet. Eine Länge des Betonkörpers 17 beträgt weniger als einen Meter, bevorzugt in etwa 0,6 m. Eine Breite des Betonkörpers 17 beträgt ebenso weniger als 1 m, insbesondere in etwa 0,5 m. Eine Höhe des Betonkörpers 17 beträgt weniger als 40 cm, vorzugsweise in etwa 25 cm. In Verbindung mit einer hohlprismatischen Ausgestaltung des Betonkörpers 17 ist dabei eine Masse unter 120 kg, insbesondere von in etwa 60 kg, problemlos erzielbar, sodass eine Manipulation durch eine Person bzw. durch zwei bis vier Personen problemlos ermöglicht ist. Der Betonkörper 17 ist dabei vorzugsweise quaderförmig ausgebildet, sodass eine möglichst lückenlose bzw. raumsparende Aneinanderreihung von mehreren Betonkörpern 17, 17', 17" möglich ist. Ein im Zentrumsbereich eines quaderförmigen, hohlprismatischen Betonkörpers 17 ausgebildeter Hohlraum 22 erstreckt sich vorzugsweise ausgehend von der Oberseite des Betonkörpers 17 durchgehend bis zur Unterseite des Betonkörpers 17. Insbesondere ist der Hohlraum 22 des Betonkörpers 17 durch wenigstens einen vertikal ausgerichteten bzw. vertikal verlaufenden Durchbruch 23 im Betonkörper 17 gebildet. Dieser wenigstens eine Durchbruch 23 senkt zum einen die Masse des Betonkörpers 17 und kann dieser Durchbruch 23 darüber hinaus in vorteilhafter Art und Weise auch als Installations- bzw. Verlegungskanal für Anschlussleitungen des Selbstbedienungsautomaten 1, insbesondere zur Unterbringung von Kabelverbindungen, genutzt werden. Insbesondere können dadurch aus dem Untergrund 15 austretende Leitungen durch den Betonkörper 17 hindurch in das jeweilige Gehäuse bzw. Gehäusemodul 13, 13', 13", insbesondere in das Steuerungsgehäuse 11 - Fig. 1 - des Selbstbedienungsautomaten 1 geleitet werden. Dadurch ist eine rasche und mühelose Installation ermöglicht. Darüber hinaus sind die jeweiligen Leitungen vor Manipulationen bzw. Beschädigungen effizient und zuverlässig geschützt. Das heißt, dass der Hohlraum 22 des wenigstens einen Betonkörpers 17 einen Aufnahme- oder Verlegungsraum für Leitungsverbindungen, insbesondere für Kabelverbindungen, zwischen aneinander gereihten Gehäusemodulen 13, 13', 13" und/oder zwischen wenigstens einem Gehäusemodul 13, 13', 13" und einem Steuerungsgehäuse 11 ausbildet. Außerdem werden zusätzliche Bohr- bzw. Schrämmarbeiten erübrigt, sodass eine möglichst rasche und mit möglichst geringem Werkzeugbedarf ausführbare Montage des jeweiligen Selbstbedienungsautomaten 1 erzielt wird.

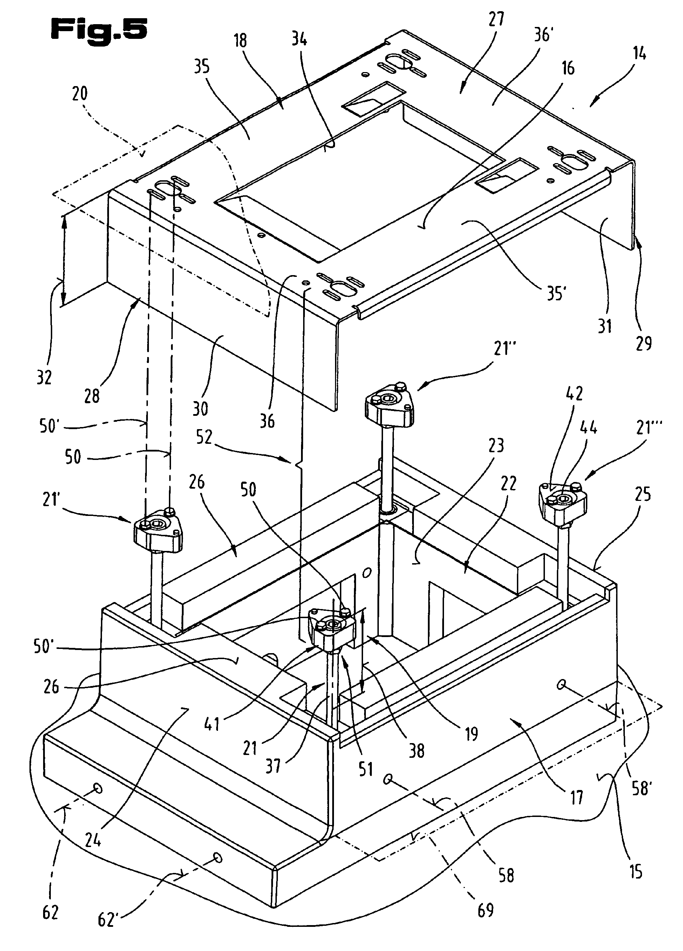

Der quaderförmige Betonkörper 17 ist vorzugsweise an zumindest zwei einander gegenüberliegenden Wandabschnitten 24, 25 sowie an seiner Oberseite 26 wenigstens teilweise vom metallischen Tragelement 18 umgrenzt. Insbesondere ist der die Vorderseite ausbildende Wandabschnitt 24 und bevorzugt auch der die Rückseite des Betonkörpers 17 darstellende Wandabschnitt 25 vom Tragelement 18 zumindest teilweise verdeckt. Vorzugsweise ist das metallische Tragelement 18 in Bezug auf den Betonkörper 17 haubenartig ausgebildet, wobei zumindest zwei einander gegenüberliegende Wandabschnitte 24, 25, insbesondere die Vorder- und Rückseite, und die Oberseite 26 des Betonkörpers 17 von einem bevorzugt plattenartigen Tragelement 18 zumindest abschnitts- oder teilweise umgrenzt bzw. verkleidet sind. Entsprechend einer vorteilhaften Ausführungsform, wie sie insbesondere in Fig. 5 ersichtlich ist, weist das metallische Tragelement 18 in Bezug auf einen Vertikalschnitt eine annährend C-förmige Geometrie auf. Ein Basiselement 27 dieses C-förmigen Körpers überdeckt dabei zumindest abschnittsweise die Oberseite 26 des Betonkörpers 17. Einander gegenüberliegende Schenkel 28, 29 dieses im Vertikalschnitt C-förmigen Körpers stellen dabei Verblendungsabschnitte 30, 31 dar, welche die einander gegenüberliegenden Wandabschnitte 24, 25 des Betonkörpers 17 zumindest teilweise überdecken bzw. verkleiden.

Vorzugsweise ist das Tragelement 18 als einteiliges Blechformteil ausgebildet. Insbesondere sind die Schenkel 28, 29 des Tragelementes 18 durch abgekantete Randbschnitte an einem plattenförmigen Basiselement 27 gebildet. Die Schenkel 28, 29 des Tragelementes 18 ergeben dabei zum einen Verblendungsabschnitte 30, 31, um die Vorder- und Rückseite, insbesondere um die vorderen und hinteren Wandabschnitte 24, 25 des Betonkörpers 17 zumindest teilweise zu verkleiden. Darüber hinaus ist mittels dieser Schenkel 28, 29 eine Versteifung des Tragelementes 18 erzielbar. Insbesondere wird das plattenartige Basiselement 27 durch die zumindest zwei einander gegenüberliegenden Schenkel 28, 29 wesentlich formsteifer, sodass es trotz leichtgewichtiger Bauweise relativ hohe Belastungen relativ verformungsfrei aufnehmen kann. Vorzugsweise ist das Tragelement 18 durch ein umgeformtes, insbesondere ein abgekantetes und gestanztes Blechbauteil gebildet. Alternativ ist es auch denkbar, das metallische Tragelement 18 mehrteilig auszuführen, insbesondere die Schenkel 28, 29 als separate Bauteile auszuführen und mit dem plattenartigen Basiselement 27 zu verbinden, insbesondere zu verschrauben. Selbstverständlich ist es auch möglich, Verblendungsabschnitte 30, 31 aus einem andersartigen Material, insbesondere aus Kunststoff, vorzusehen, um eine eventuelle Bearbeitung derselben zu vereinfachen.

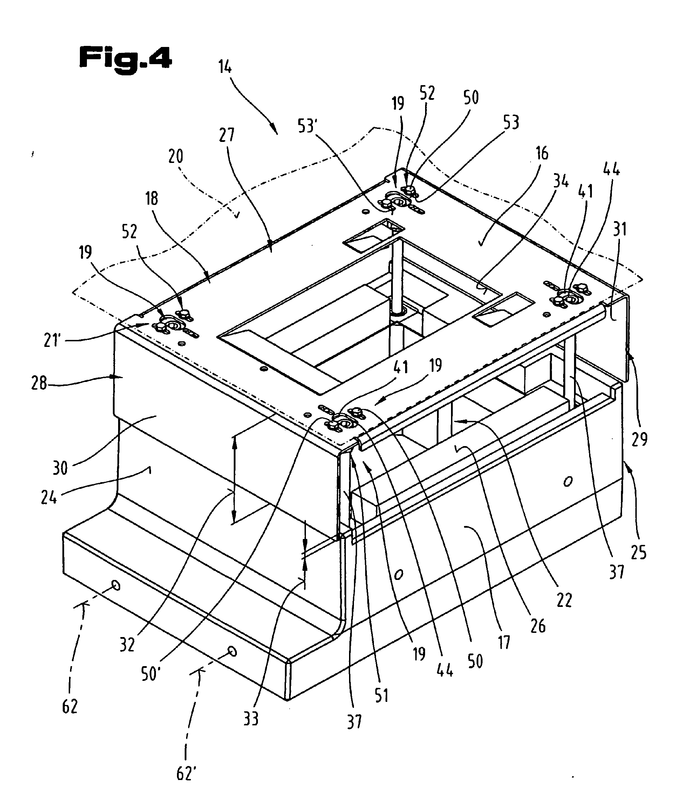

Die Dimensionierung dieser Verblendungsabschnitte 30, 31 ist vorzugsweise derart gewählt, dass die Verblendungsabschnitte 30, 31 in jeder Relativstellung des Tragelementes 18 gegenüber dem Betonsockel 17 zumindest Teilabschnitte seiner Wandflächen, insbesondere Teilabschnitte seiner vorderen und/oder hinteren Wandabschnitte 24, 25 verdecken. Insbesondere ist das zumindest eine Verblendungselement 30, 31 in Bezug auf seine vertikale Höhe 32 derart bemessen, dass auch bei maximal ausgefahrener Stellung der Einstellvorrichtung 19 zwischen dem Betonsockel 17 und dem Verblendungselement 30 und/oder 31 eine auf die Vertikalrichtung bezogene, gegenseitige Überlappung 33 verbleibt. Insbesondere ist zumindest an der Vorderseite des Sockelelementes 14 der Schenkel 28 bzw. der dementsprechende Verblendungsabschnitt 30 derart hoch dimensioniert, dass stets bzw. bei allen zulässigen Einstellungen der Einstellvorrichtung 19 eine Überlappung 33 vorliegt und somit eine Spaltbildung in vertikaler Richtung zwischen dem Betonkörper 17 und dem Tragelement 18 unterbunden ist. Fig. 3 zeigt dabei die maximal eingefahrene bzw. abgesenkte Stellung der Einstellvorrichtung 19 bzw. des Tragelementes 18, während Fig. 4 die maximal ausgefahrene bzw. hochgestellte Stellung der Einstellvorrichtung 19 bzw. des Tragelementes 18 veranschaulicht.

Wie weiters am besten aus Fig. 5 ersichtlich ist, ist das metallische Tragelement 18 durch ein plattenartiges, im Wesentlichen ebenflächiges Basiselement 27 gebildet. Auf diesem zumindest annährend ebenflächigen Basiselement 27 ist ein Gehäusemodul 13, 13', 13" eines modulartig zusammensetzbaren Selbstbedienungsautomaten 1 - Fig. 1 - abstützbar. Das Basiselement 27 stellt dabei ein ausnivellierbares Element bzw. Podestbestandteil dar, welches einigermaßen unabhängig von der Lage, insbesondere von einer Schieflage des Betonkörpers 17, eine Ausnivellierung der Oberseite, insbesondere der Abstützebene 20 am Tragelement 18 ermöglicht. Hierfür ist eine manuelle Justierung an der Einstellvorrichtung 19 des Sockelelementes 14, insbesondere an wenigstens einem Stellelement 21, 21', 21", 21"' vorzunehmen.

Das plattenartige Basiselement 27 weist entsprechend einer vorteilhaften Ausgestaltung einen zentralen Durchbruch 34 auf. Zumindest zwei an diesen Durchbruch 34 angrenzende Randabschnitte 35, 35' bzw. 36, 36' des Tragelementes 18, bevorzugt alle rings um den Durchbruch 34 angeordneten Randabschnitte 35, 35' und 36, 36' des Basiselementes 27 sind zur lastabtragenden Abstützung der äußeren Randbereiche, insbesondere der Wandabschnitte eines schrankartig ausgebildeten Gehäusemoduls 13, 13', 13" ausgebildet. Das heißt, dass sich vor allem die Wandabschnitte eines Gehäusemoduls 13, 13', 13" auf den Randabschnitten 35, 35', 36, 36' des Tragelementes 18 lastübertragend abstützen, während der Zentrumsbereich des Bodenabschnittes eines Gehäusemoduls 13, 13', 13" gegenüber dem zentralen Abschnitt des Tragelementes 18 freigestellt ist.

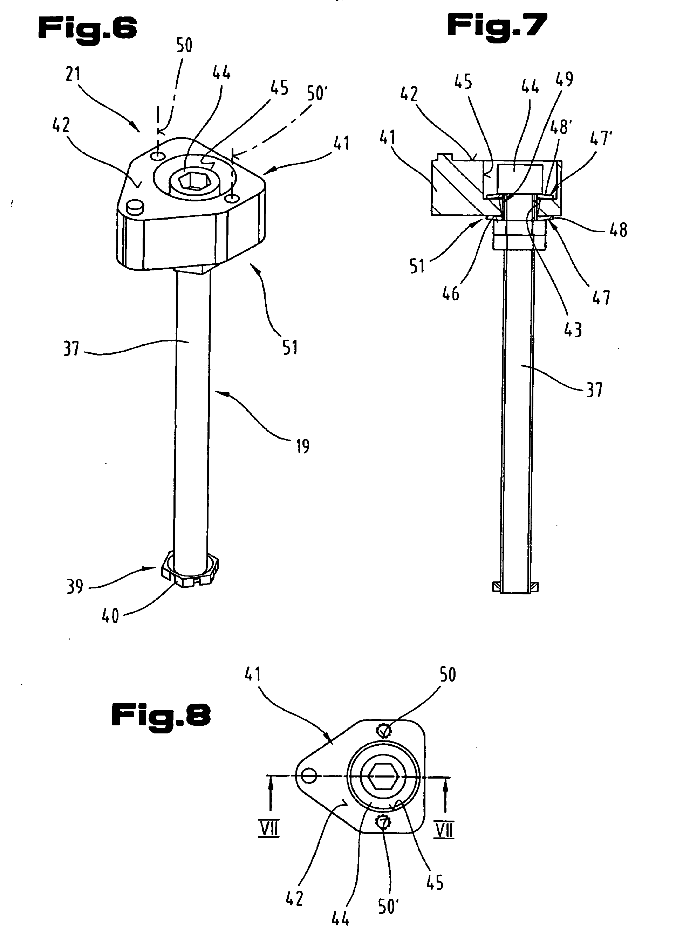

Durch eine Zusammenschau der Fig. 5 bis 8 ist der Aufbau und die Wirkungsweise der Einstellvorrichtung 19 zur bedarfsweisen Nivellierung und/oder Höhenverstellung der Abstützebene 20 bzw. des metallischen Tragelementes 18 einfach erkennbar. Das zumindest eine Stellelement 21, 21', 21 ", 21"' der Einstellvorrichtung 19 ist dabei manuell bedienbar, insbesondere unter Zuhilfenahme eines Schrauben- oder Inbus-Schlüssels betätigbar. Ein solches Stellelement 21, wie es in den Fig. 6 bis 8 im Detail dargestellt ist, umfasst einen Gewindestift 37, insbesondere eine Gewindeschraube in Form einer Inbus-Schraube, welche im Wesentlichen senkrecht zur Oberseite 26 des Betonkörpers 17 ausgerichtet ist. Bei annährend horizontaler Ausrichtung des Betonkörpers 17 ist der Gewindestift 37 somit im Wesentlichen vertikal ausgerichtet. Durch Verdrehen des Gewindestiftes 37 ist dessen vertikaler Überstand 38 gegenüber dem Betonkörper 17, insbesondere gegenüber dessen Oberseite 26, einstellbar. Das heißt, dass das vertikale Übermaß bzw. der in Vertikalrichtung gemessene Überstand 38 durch individuell angepasstes Hinein- oder Herausschrauben des Gewindestiftes 37 gegenüber dem Betonkörper 17 bedarfsweise veränderbar ist. Durch Ausbildung von zumindest drei, bevorzugt vier solchen Stellelementen 21, 21', 21", 21"' kann somit eine horizontal ausgerichtete Abstützebene 20 bzw. ein horizontal ausgerichtetes Tragelement 18 auch dann erzielt werden, wenn der Betonkörper 17 aufgrund der Verläufe bzw. Gegebenheiten des Untergrundes 15 schief bzw. geneigt positioniert ist.

Hierzu umfasst die Einstellvorrichtung 19 weiters zumindest eine in den Betonkörper 17 bevorzugt eingegossene, mit dem Gewindestift 37 korrespondierende Gewindehülse 39, welche beispielsgemäß als Schraubenmutter 40 ausgeführt ist. Alternativ kann anstelle der Verwendung einer Gewindehülse 39 bzw. einer Schraubenmutter 40 auch eine Gewindeplatte in den Betonkörper 17 eingelegt oder eingegossen sein. Wesentlich ist, dass diese Gewindehülse 39 oder Schraubmutter 40 bzw. Gewindeplatte gegenüber dem Betonkörper 17 verdrehfest festgelegt ist und vor allem die in Vertikalrichtung nach unten auftretenden Belastungen auf den Betonkörper 17 übertragen kann, ohne dass Verformungen oder Beschädigungen der Gewindehülse 39 bzw. der Schraubenmutter 40 oder einer dementsprechenden Gewindeplatte auftreten.

Der Gewindestift 37 stützt das metallische Tragelement 18 entweder direkt oder bevorzugt unter Zwischenschaltung eines Abstützkopfes 41 gegenüber dem Betonkörper 17 ab. Dieser Abstützkopf 41 ist bevorzugt in dem vom Betonkörper 17 abgewandten Endabschnitt des Gewindestiftes 37 ausgebildet. Der Abstützkopf 41 weist an seiner Oberseite wenigstens eine Stützfläche 42 auf, an welcher die Unterseite des Tragelementes 18 lastübertragend abgestützt ist.

Entsprechend einer vorteilhaften Ausführungsform ist der Abstützkopf 41, welcher vorzugsweise in dem vom Betonkörper 17 abgewandten Endabschnitt des Gewindestiftes 37 ausgebildet ist, relativ zum Gewindestift 37 winkelveränderlich gelagert. Das heißt, dass zwischen dem Gewindestift 37 und dem Abstützkopf 41 eine Veränderung der Winkellage bzw. der gegenseitigen Ausrichtung ermöglicht ist. Insbesondere ist durch diese Winkelveränderlichkeit die Ausrichtung der Stützfläche 42 des Abstützkopfes 41 relativ zur Längsachse des Gewindestiftes 37 veränderlich bzw. veränderbar, insbesondere horizontal ausrichtbar. Somit kann auch bei einem schiefen bzw. geneigt verlaufenden Gewindestift 37 eine horizontal ausgerichtete Stützfläche 42 und folglich eine möglichst vollflächige Auflage des Tragelementes 18 an der Oberseite bzw. Stützfläche 42 des Abstützkopfes 41 erzielt werden. Der Abstützkopf 41 ist dabei um zumindest zwei Koordinatenachsen, welche quer zur Längsachse des Gewindestiftes 37 verlaufen, neigbar. In zweckmäßiger Art und Weise ist also der Abstützkopf 41 gegenüber dem Gewindestift 37 gelenkig, insbesondere kardanisch oder quasi kardanisch gelagert.

Entsprechend einer vorteilhaften Ausführungsform ist der Abstützkopf 41 vom Gewindestift 37 zumindest teilweise durchsetzt, wie dies beispielsweise aus Fig. 7 ersichtlich ist. Zumindest ein Teilabschnitt eines entsprechenden Durchbruches 43 im Abstützkopf 41, in welchem

Durchbruch 43 der obere Endabschnitt des Gewindestiftes 37 verläuft, ist bevorzugt hohlkegelig ausgeführt. Insbesondere verlaufen die Begrenzungsflächen des Durchbruches 43 annährend konisch, wie dies am besten aus Fig. 7 ersichtlich ist. Entsprechend einer vorteilhaften Ausführungsform ist ein Schraubenkopf 44 eines als Gewindeschraube ausgeführten Gewindestiftes 37 in einer Ausnehmung 45 des Abstützkopfes 41 versenkt bzw. vertieft angeordnet.

Der Abstützkopf 41 ist dabei mittels einer ersten, insbesondere mittels einer unteren Stützfläche 46 gegenüber dem Gewindestift 37 derart lastübertragend abgestützt, dass eine Relativverstellung des Abstützkopfes 41 in Axialrichtung des Gewindestiftes 37 zumindest weitgehend unterbunden ist. Der Abstützkopf 41 ist dabei bevorzugt unter Zwischenschaltung eines elastisch nachgiebigen bzw. elastisch verformbaren Elementes 47 gegenüber dem Gewindestift 37 lastübertragend abgestützt. Dieses elastisch nachgiebige Element 47 dient dabei als federartiges Ausgleichselement, sodass der Abstützkopf 41 entgegen der Kraftwirkung dieses elastisch nachgiebigen Elementes 47 gegenüber dem Gewindestift 37 neigungs- bzw. winkelveränderlich gelagert ist. Die Kraftwirkung des elastisch nachgiebigen Elementes 47 bewirkt dabei, dass der Abstützkopf 41 bzw. dessen Stützfläche 42 fortwährend in eine rechtwinkelig zur Längsachse des Gewindestiftes 37 ausgerichtete Stellung gedrängt wird.

Wie aus einer Zusammenschau der Fig. 6 bis 8 einfach erkennbar ist, ist der Abstützkopf 41 bei entsprechender Krafteinwirkung gegenüber dem Gewindestift 37 neigbar, wobei diese Neigungsbewegung entgegen der Kraftwirkung des wenigstens einen, federelastisch nachgiebigen Elementes 47 erfolgt. Dadurch ist eine robuste und zugleich kostengünstige, gelenkige Verbindung zwischen dem Abstützkopf 41 und dem Gewindestift 37 geschaffen. Alternativ ist es selbstverständlich auch möglich, anstelle der beschriebenen Ausgleichselemente bzw. anstelle des federnden Elementes 47 in Verbindung mit einem konischen bzw. kegelförmigen Durchbruch 43 im Abstützkopf 41, eine Art Kugel-Pfannen-Gelenk vorzusehen.

Entsprechend einer bevorzugten Ausführungsvariante ist der Abstützkopf 41 unter Zwischenschaltung eines unteren und eines oberen, elastischen Elementes 47, 47' relativ zur Längsachse des Gewindestiftes 37 elastisch nachgiebig positioniert, wie dies in Fig. 7 veranschaulicht wurde. Die elastische Nachgiebigkeit beträgt dabei wenige Millimeter, insbesondere weniger als in etwa 2 mm. Wesentlich ist dabei, dass die Stützfläche 42 am Abstützkopf 41 gegenüber der Längsachse des Gewindestiftes 37 um bis zu 10° neigungsveränderlich ist. Typischerweise ist eine Neigungsveränderlichkeit von bis zu 5° ausreichend.

Entsprechend einer bevorzugten Ausführungsform ist das wenigstens eine elastisch nachgiebige Element 47, 47' durch zumindest eine auf dem Gewindestift 37 aufgefädelte Tellerfeder 48, 48' gebildet. Der Gewindestift 37 durchsetzt also den Abstützkopf 41 mit definiertem, radialen Spielraum 49, sodass die belastungsabhängige Neigungsveränderbarkeit des Abstützkopfes 41 gegenüber dem Gewindestift 37 erzielbar ist. Der Schraubenkopf 44, insbesondere dessen Formschlussmittel, ist aufgrund der Ausnehmung 45 in der Stützfläche 42 ausgehend von der Oberseite des Abstützkopfes 41 zugänglich. Insbesondere kann durch Anbringen eines passenden Sechskant-Werkzeuges eine Verdrehung des Gewindestiftes 37 vorgenommen werden. Je nach Anzahl der Drehungen bzw. je nach Veränderung des Drehwinkels des Gewindestiftes 37 wird der Abstützkopf 41 gegenüber der Oberseite 26 des Betonkörpers 17 angehoben oder abgesenkt. Der Abstützkopf 41 ist dabei gegenüber dem Gewindestift 37 um dessen Längsachse drehbeweglich gelagert. Insbesondere ermöglicht der radiale Spielraum 49 zwischen dem oberen Ende, insbesondere zwischen dem Schaft des Gewindestiftes 37 und dem Durchbruch 43 im Abstützkopf 41 eine Drehbeweglichkeit, sodass der Abstützkopf 41 mittels wenigstens einer Schraubverbindung 50, 50' starr mit dem Tragelement 18 verbunden werden kann, wie dies am besten aus einer Zusammenschau der Fig. 5 und 6 erkennbar ist. Das Tragelement 18 bewirkt dabei in dem mit den Abstützköpfen 41 fest verbundenen Zustand, dass die Stützflächen 42 jedes Stellelementes 21, 21', 21", 21'" in einer gemeinsamen Ebene angeordnet sind, insbesondere in eine parallel zur Abstützebene 20 ausgerichtete Ebene gedrängt werden. Dabei wird eine Mehrpunktabstützung für das Tragelement 18 geschaffen, wobei die jeweiligen Abstützzonen für das Tragelement 18 möglichst großflächig, insbesondere entsprechend der Größe der Stützflächen 42 ausfallen. Durch eine frei bewegliche Gelenkigkeit der Abstützköpfe 41 gegenüber den jeweiligen Gewindestiften 37 oder durch die beschriebene, in eine definierte Ausgangslage elastisch rückstellende Gelenkigkeit der Abstützköpfe 41 werden Verspannungen bzw. Verformungen im Tragelement 18 möglichst vermieden bzw. wird durch die ausgleichende Gelenkigkeit der jeweiligen Abstützköpfe 41 eine definierte Abstützung bzw. Auflage für das Tragelement 18 geschaffen. Eine solche Gelenksverbindung 51 zwischen dem Abstützkopf 41 und dem Gewindestift 37 trägt einerseits zu einer stabilen bzw. definierten Verbindung zwischen dem Tragelement 18 und dem wenigstens einen Stellelement 21, 21', 21", 21'" bei und wird darüber hinaus die Justierung des Sockelelementes 14 bzw. die Montage des Selbstbedienungsautomaten 1 erleichtert.

Bevorzugt ist zusätzlich zu einer Gelenksverbindung 51 zwischen dem Abstützkopf 41 und dem Gewindestift 37 auch eine relativverstellbare, translatorisch justierbare Verbindung 52 zwischen wenigstens einem der Stellelemente 21, 21', 21", 21"', insbesondere zwischen deren Abstützköpfe 41 und dem Tragelement 18 ausgebildet. Diese translatorisch relativverstellbare Verbindung 52 ermöglicht dabei eine individuell justierbare Relativverstellung zwischen dem Tragelement 18 und dem Betonkörper 17 innerhalb der Abstützebene 20 für ein Gehäusemodul 13 - Fig. 1. Die Relativverstellbarkeit des Tragelementes 18 relativ zum Betonkörper 17, insbesondere in Bezug auf den wenigstens einen Abstützkopf 41 erfolgt dabei innerhalb der Abstützebene 20. Entsprechend einer vorteilhaften Ausführungsform umfasst diese relativverstellbare Verbindung 52 wenigstens einen langlochförmigen Durchbruch 53, 53', welcher mit der wenigstens einen Schraubverbindung 50, 50' zwischen dem Tragelement 18 und dem wenigstens einen Stellelement 21, 21', 21", 21'" in Wechselwirkung steht. Insbesondere ist es durch diese relativverstellbare Verbindung 52 zwischen dem Tragelement 18 und dem wenigstens einen Stellelement 21, 21', 21", 21"', insbesondere in Bezug auf dessen zumindest einen Abstützkopf 41 ermöglicht, ein horizontal ausgerichtetes Tragelement 18 möglichst zentrisch über dem Betonkörper 17 zu positionieren. Insbesondere kann auch dann, wenn der Betonkörper 17 schiefwinkelig abgestellt ist und das Tragelement 18 daraufhin ausnivelliert wurde, das heißt in eine horizontale Ebene verbracht wurde, eine zentrale bzw. möglichst zentrale Positionierung des Tragelementes 18 oberhalb des Betonsockels 17 geschaffen werden. Vor allem kann dadurch bei mehreren, nebeneinander gereihten Sockelelementen 14, 14', 14" - Fig. 1 - ein Spaltmaß zwischen nebeneinander liegenden Tragelementen 18 bzw. Verblendungsabschnitten 30, 31 vereinheitlicht bzw. ausgeglichen werden. Das heißt, dass das metallische Tragelement 18 gegenüber dem bevorzugt metallisch ausgeführten Abstützkopf 41 seitlich justierbar ist, um unterschiedliche Spaltmaße zwischen aufeinanderfolgenden Verblendungsabschnitten 30 bzw. 31 zu vermeiden bzw. möglichst gleichmäßig einstellen zu können. Insbesondere dann, wenn das Tragelement 18 mittels dem wenigsten einen Stellelement 21, 21', 21 ", 21'" ausnivelliert ist und die seitlichen Spaltmaße gegenüber angrenzenden Tragelementen 18 ausgeglichen bzw. möglichst vereinheitlicht sind, werden die Schraubverbindungen 50, 50' zwischen den einzelnen Abstützköpfen 41 und den jeweiligen Tragelementen 18 festgezogen, woraufhin eine stabile Abstützplattform für Gehäusemodule 13, 13', 13" eines Selbstbedienungsautomaten 1 geschaffen ist. Entsprechend einer praktikablen Ausführungsform ist die seitlich relativverstellbare Verbindung 52 durch eine einfache Schrauben-Langloch-Verbindung zwischen dem plattenartigen Basiselement 27 und den jeweiligen Abstützköpfen 41 der Stellelemente 21, 21', 21", 21'" ausgeführt, wie dies am besten aus Fig. 5 ersichtlich ist.

Entsprechend einer zweckmäßigen Ausgestaltung ist im Bodenabschnitt der Gehäusemodule 13, 13', 13", insbesondere in deren Bodenplatte 54, wenigstens eine Öffnung 55, 5' ausgebildet, über welche auch bei einem auf dem Tragelement 18 bereits befestigten Gehäusemodul 13, 13', 13" die Einstellvorrichtung 19, insbesondere die Höhenverstellung und auch die zuvor beschriebene Seiten- bzw. Querverstellung für das Tragelement 18 ausgehend vom Innenraum des jeweiligen Gehäusemoduls 13, 13', 13" zugänglich ist. Die wenigstens eine Öffnung 55, 55' im Boden, insbesondere in der Bodenplatte 54 des wenigstens einen Gehäusemoduls 13, 13', 13" ist dabei derart positioniert, dass zumindest eine Höhenverstellung des Tragelementes 18 in zumindest einem Eckbereich, bevorzugt an allen Ecken des Tragelementes 18, vorgenommen werden kann. Bevorzugt ist zusätzlich auch die seitliche bzw. translatorische Verstellbarkeit mittels der relativverstellbaren Verbindung 52, insbesondere durch Lösen bzw. Lockern der Schraubverbindung 50, 50' zugänglich. Die jeweiligen Öffnungen 55, 55' in der Bodenplatte 54 können nach erfolgter Justierung durch nicht dargestellte Verschluss- bzw. Deckelelemente wieder verschlossen werden, um Verhakungen bzw. ein Durchfallen von Gegenständen durch die Öffnung 55, 55' zu unterbinden. Alternativ ist es auch möglich, die Bodenplatte 54 in den Gehäusemodulen 13, 13', 13" herausnehmbar oder anhebbar auszuführen, um so Zugriff auf die Einstellvorrichtung 19, insbesondere auf die Stellelemente 21, 21', 21", 21"' und/oder auf die jeweiligen, translatorisch justierbaren Verbindungen 52 zu erlangen.

Im ordnungsgemäß aufgebauten Zustand des Selbstbedienungsautomaten 1 ist dieser, insbesondere dessen wenigstens einmal ausgebildetes Gehäusemodul 13, 13', 13" ablösungssicher mit dem Tragelement 18 bzw. 18' bzw. 18" verbunden. Diese Verbindung kann durch eine Formschlussverbindung oder eine Kombination aus Formschlussverbindung und Schraubverbindung aufgebaut sein. Insbesondere wird dabei der Bodenabschnitt bzw. die Bodenplatte 54 des jeweiligen Gehäusemoduls 13, 13', 13" mit dem jeweiligen Tragelement 18, 18', 18" verankert, sodass ein Umkippen bzw. Herunterfallen des Gehäusemoduls 13, 13', 13" vom podestartigen Sockelelement 14 bzw. 14' bzw. 14" zuverlässig bzw. mit ausreichend hoher Haltekraft unterbunden ist. Um eine Neujustierung zu ermöglichen bzw. um eine erste Ausnivellierung zu bewerkstelligen, kann jederzeit ein Zugriff auf die Einstellvorrichtung 19 erfolgen. Dabei wird über die wenigstens eine Öffnung 55, 55' im Bodenabschnitt bzw. durch Herausnehmen oder Anheben der Bodenplatte 54 auf das wenigstens eine Stellelement 21, 21', 21", 21'" justierend eingewirkt.

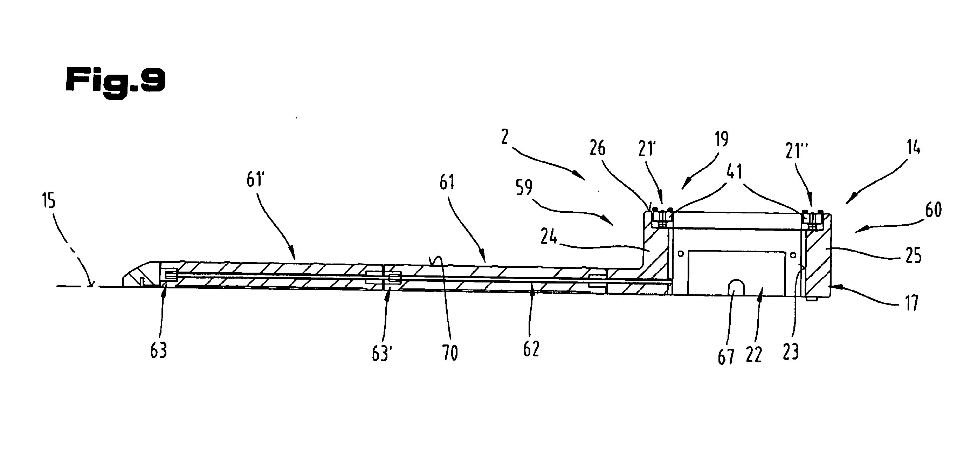

Wie am besten aus den Fig. 9 bis 11 ersichtlich ist, sind mehrere Sockelelemente 14, 14' im Wesentlichen spaltfrei aneinander reihbar. Die Sockelelemente 14, 14' sind dabei jeweils baugleich ausgeführt. Dadurch kann die Anzahl der Sockelelemente 14 ausgehend von einem Ende oder ausgehend von beiden Enden dieser Aneinanderreihung bedarfsweise vergrößert oder auch verringert werden. Insbesondere kann für den Fall, dass eine höhere Anzahl von Gehäusemodulen erforderlich ist, an eine bereits bestehende Reihe von Sockelelementen 14 zumindest ein weiteres Sockelelement angefügt werden und auf diesem Sockelelement ein weiteres Gehäusemodul aufgesetzt werden, um so die Aufnahmekapazität des Selbstbedienungsautomaten 1 - Fig. 1 - zu steigern. Eine absolute Ebenflächigkeit des Untergrundes 15 ist dabei nicht erforderlich. Durch die ausgleichsfähigen Sockelelemente 14 kann auch dann eine relativ unverzügliche Erweiterung des Selbstbedienungsautomaten 1 vorgenommen werden, wenn gewisse Unebenheiten vorliegen. Beispielsweise kann auch dann, wenn ein Gefälle von bis zu 5 % vorliegt, ein bereits bestehender Selbstbedienungsautomat 1 problemlos aufgerüstet bzw. erweitert werden. Entsprechendes gilt für eine Neuerrichtung eines Selbstbedienungsautomaten 1.

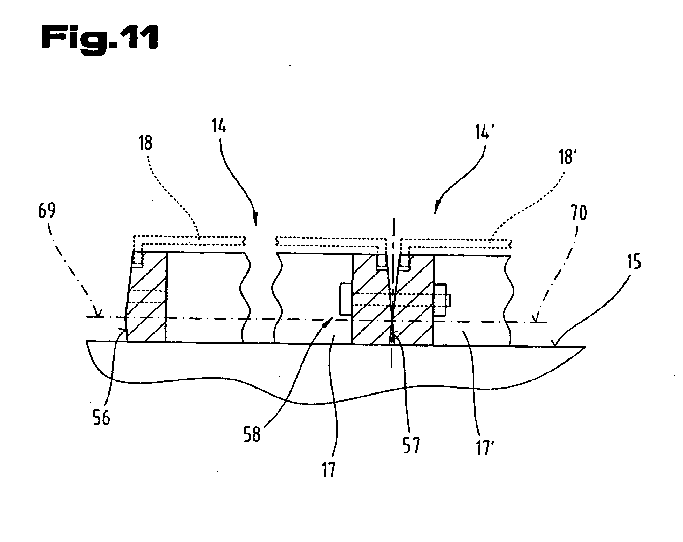

Wie am besten aus Fig. 11 ersichtlich ist, sind die jeweiligen Sockelelemente 14, 14', insbesondere deren Betonkörper 17, 17' im Wesentlichen spaltfrei aneinander reihbar. Einander gegenüberliegende Seitenwände 56, 57 des Betonkörpers 17, 17' verlaufen dabei in Bezug auf deren Außenflächen ausgehend vom Bodenabschnitt des Betonkörpers 17, 17' in Richtung zu dessen oberen Endabschnitt bis zu einer ersten Horizontalebene 69 leicht divergierend und anschließend leicht konvergierend, sodass in Bezug auf einen Vertikalschnitt durch die Seitenwände 56, 57 deren Außen- bzw. Wandflächen jeweils bombiert sind oder zumindest zwei stumpfwinkelig zueinander ausgerichtete Teilflächen aufweisen.

Das heißt, dass die Betonkörper 17, 17' zumindest zwei einander gegenüberliegende Seitenwände 56, 57 aufweisen, deren Außenflächen im unteren Abschnitt leicht V-förmig zueinander ausgerichtet sind und deren Außenflächen sich im oberen Endabschnitt wieder einander annähern, sodass die Betonkörper 17, 17' ihre maximale Breite innerhalb einer Horizontalebene 69 zwischen der Oberseite und der Unterseite des Betonkörpers 17, 17' aufweisen, wie dies am besten aus Fig. 11 ersichtlich ist. Insbesondere verlaufen die Außenflächen der Seitenwände 56, 57 der Betonkörper 17, 17' ausgehend von dieser Horizoritalebene 69 in Richtung nach oben und unten jeweils zusammen. Eine entsprechende Übergangskante der Betonkörper 17, 17', welche in etwa auf Höhe der Horizontalebene 69 liegt, ist auch den Darstellungen der Sockelelemente 14, 14, 14' gemäß den Fig. 3-5 zu entnehmen. Das Höhenniveau der Horizontalebene 69 gegenüber dem Untergrund 15 entspricht dabei in etwa einem Höhenniveau einer von einem Benutzer zu betretenden Trittfläche 70 auf einem gepflasterten Vorbauabschnitt - Fig. 1 - des Selbstbedienungsautomaten 1.

Dadurch ist es ermöglicht, auch bei einer knickartig abfallenden Aufstellfläche bzw. bei einem relativ unebenen Untergrund 15 eine möglichst spaltfreie bzw. eine direkt aneinander anliegende Aneinanderreihung von Sockelelementen 14, 14' zu gewährleisten. Dies ist vor allem für eine stabile bzw. möglichst wackelfreie Aufstellung eines aus mehreren Modulen zusammengesetzten Selbstbedienungsautomaten 1 von Vorteil. Insbesondere können sich dadurch benachbarte Betonkörper 17, 17' gegenseitig stützen bzw. wird durch eine relativ spielfreie, Kräfte übertragende Verbindung oder auch durch eine Vorspannung zwischen benachbarten Sockelelementen 14, 14' eine erhöhte Standfestigkeit erzielt.

Entsprechend einer zweckmäßigen Ausführungsform sind aneinander gereihte Sockelelemente 14, 14', insbesondere deren Betonkörper 17, 17', untereinander derart verbunden, dass ein Auseinanderdriften unterbunden ist. Hierfür ist wenigsteris eine Schraubverbindung 58, 58' zwischen benachbarten Betonkörpern 17,17' zweckmäßig. Diese gegenseitige Kopplung, insbesondere die Schraubverbindung 58, 58' ist dabei derart ausgeführt, dass ein Kippen bzw. Anheben eines ersten Betonkörpers 17 auch eine Anhebung des benachbarten Betonkörpers 17' verursachen würde. Dennoch sind die einzelnen Sockelelemente 14,14' bzw. deren Betonkörper 17, 17' über die Schraubverbindungen 58, 58' in gewisser Weise gelenkig gekoppelt, sodass eine knick- oder wellenartige Angleichung einer Reihenanordnung von Betonkörpern 17, 17' an eventuelle Unebenheiten des Untergrundes 15 in gewissem Ausmaß erfolgen kann. In Bezug auf vertikale Relativverstellungen bzw. Kippbewegungen sind die Betonkörper 17, 17' jedoch miteinander bewegungsgekoppelt, insbesondere möglichst spielfrei miteinander verbunden. Durch diese quasi einer Verkettung entsprechende, gelenkige Kopplung zwischen benachbarten Sockelelementen 14, 14' wird die resultierende Standfestigkeit bzw. Standsicherheit der aneinander gereihten Sockelelemente 14, 14', welche zur Aufnahme der jeweiligen Gehäusemodule bzw. Gehäuse von Selbstbedienungsautomaten 1 - Fig. 1 - vorgesehen sind, deutlich gesteigert. Eine virtuelle Gelenksachse zwischen benachbarten Sockelelementen 14, 14', insbesondere zwischen miteinander gekoppelten Betonkörpern 17, 17' verläuft dabei im Wesentlichen parallel zur Abstützebene 20 bzw. zum Untergrund 15.

Im gezeigten Ausführungsbeispiel sind zwischen zwei benachbarten Sockelelementen 14, 14' jeweils zwei Schraubverbindungen 58, 58' vorgesehen. Anstelle von Schraubverbindungen 58, 58' ist es auch möglich, sonstige formschlüssige Verbindungen, beispielsweise Nut-Feder-Verbindungen zwischen aneinander gereihten Betonkörpers 17, 17' vorzusehen und hiermit eine Relativverstellung zwischen benachbarten Betonkörpern 17, 17' in vertikaler Richtung zum Untergrund 15 zu unterbinden bzw. hintan zu halten und so die Standfestigkeit bzw. Standsicherheit der Sockelelemente 14, 14' zu steigern. Entsprechend einer zweckmäßigen Ausgestaltung sind nämlich die einzelnen Gehäusemodule 13, 13', 13" primär nur auf den jeweiligen Sockelmodulen 14, 14', 14" lastübertragend abgestützt. Eine bewegungsstarre, gegenseitige Verbindung zwischen den einzelnen Gehäusemodulen 13, 13', 13" ist vorzugsweise nicht vorgesehen. Das heißt, dass die einzelnen Schrankkörper bzw. Gehäusemodule 13, 13', 13" quasi selbststehend ausgeführt sind und einander benachbarte Wandabschnitte von Gehäusemodulen 13, 13', 13" zumindest während ihrer Montage bevorzugt nicht starr miteinander verbunden sind, sondern relativbeweglich verbleiben. Insbesondere soll eine gewisse Relativverstellbarkeit zwischen den einzelnen Wandabschnitten der Gehäusemodule 13,13', 13" innerhalb einer vertikal verlaufenden Übergangsebene bzw. Übergangsschnittstelle weiterhin ermöglicht sein. Dadurch werden Verspannungen zwischen den einzelnen Gehäusemodulen 13, 13',13" und damit einhergehende, nachteilige Auswirkungen auf die Maßhaltigkeit bzw. in Bezug auf eine möglichst geradlinige oder verwindungsfreie Ausrichtung der Gehäusemodule 13, 13', 13" vermieden. Insbesondere werden gegenseitige Verspannungen und damit einhergehende, eventuell auftretende Verklemmungen von Fachtüren an Aufnahmefächern 5, 5', 5" - Fig. 1 - zuverlässig vermieden bzw. hintan gehalten. Insbesondere ist ein erstes, schrankartig ausgebildetes Gehäusemodul 13 auf einem ersten Sockelelement 14 lastübertragend abgestützt. Dieses Gehäusemodul 13 ist in Bezug auf ein benachbart angeordnetes, im Wesentlichen spaltlos angereihtes und auf einem weiteren Sockelelement 14' abgestütztes, schrankartiges Gehäusemodul 13' lose angereiht, sodass es gegenüber dem benachbarten Gehäusemodul 13 zumindest innerhalb einer Vertikalebene, insbesondere in Bezug auf eine vertikale Trennebene zwischen den benachbarten Gehäusemodulen 13,13' relativbeweglich bleibt. Zumindest während der Durchführung von Justagearbeiten ist diese Relativbeweglichkeit von besonderem Nutzen, um gegenseitige Verspannungen und damit einhergehende Verwindungen von aneinander gereihten Gehäusemodulen 13, 13', 13" zu vermeiden. Gegebenenfalls kann nach erfolgter, ordnungsgemäßer Ausrichtung benachbarte Gehäusemodule 13,13', 13" auch eine gegenseitige Verbindung, beispielsweise eine Klemm- oder Schraubverbindung aufgebaut werden, um die Steifigkeit der Gehäusemodule 13, 13', 13" bzw. des damit aufgebauten Gehäusekörpers bei Bedarf zu erhöhen.

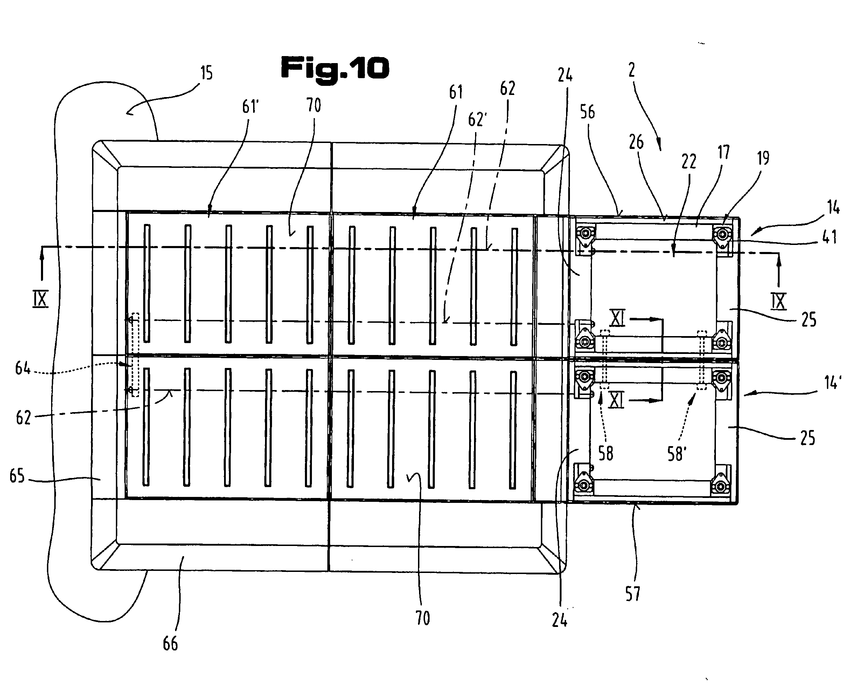

Wie am besten den Darstellungen in den Fig. 9, 10 zu entnehmen ist, ist an zumindest einer Seite, insbesondere an der Vorderseite 59 und/oder an der Rückseite 60 des Sockelelementes 14, 14' zumindest ein Pflasterungselement 61, 61' aus Beton anreihbar. Entsprechend einer zweckmäßigen Ausgestaltung ist insbesondere im Bereich der Vorderseite 59 des Sockelelementes 14, 14' ein Beton-Pflasterungselement 61, 61' ausgebildet, welches quasi einen gepflasterten Vorbereich bzw. Vorplatz für den Selbstbedienungsautomaten 1 darstellt, wie dies auch der Fig. 1 zu entnehmen ist. Das wenigstens eine Pflasterungselement 61, 61' ist dabei mit dem jeweiligen Sockelelement 14,14', insbesondere mit dessen Betonkörper 17, 17' ablösungsfest bzw. bewegungsfest verbunden. Insbesondere ist zumindest ein Abdriften des wenigstens einen Pflasterungselementes 61, 61' gegenüber dem Sockelelement 14, 14' unterbunden. Bevorzugt ist diese Verbindung derart ausgeführt, dass in Bezug auf die einander zugewandten Abschnitte eine Abweichbewegung bzw. Relativverstellung zwischen dem Sockelelement 14, 14' und einem mit-diesem verbundenen Pflasterungselement 61, 61' in Vertikalrichtung zum Untergrund 15 unterbunden oder zumindest weitestgehend unterbunden ist. Diese Verbindung soll jedoch eine gewisse Winkelveränderlichkeit zwischen zwei angrenzenden Pflasterungselementen 61, 61' ermöglichen, sodass die Oberflächen benachbarter Pflasterungselemente 61, 61', welche jeweils Trittflächen 70 für einen Benutzer ausbilden, einen von 180° abweichenden Winkel einschließen können. Weiters soll eine gewisse Winkelveränderlichkeit bzw. Neigungsvariabilität zwischen einem Sockelelement 14, 14' und einem daran angrenzenden Pflasterungselement 61 ermöglich sein, um gewisse Unebenheiten, insbesondere Unebenheiten des Untergrundes 15 ausgleichen zu können und eine möglicht vollflächige bzw. "satte" Auflage der Pflasterungselemente 61, 61' und des wenigstens einen Betonsockels 17, 17' am Untergrund 15 zu erzielen.

Zweckmäßigerweise ist die Verbindung zwischen dem Sockelelement 14, 14' und dem wenigstens einen Pflasterungselement 61, 61' durch wenigstens eine, das Pflasterungselement 61, 61' und das Sockelelement 14, 14' zumindest teilweise durchsetzende Seil- oder Stangenverbindung 62, 62' gebildet. Diese Seil- oder Stangenverbindung 62, 62' ist vor allem in Abhängigkeit der jeweils erforderlichen Anzahl an aneinander gereihten Pflasterungselementen 61, 61' bedarfsweise verlänger- und kürzbar, wie dies in erster Linie aus der Darstellung gemäß Fig. 9 ersichtlich ist. Insbesondere umfasst die Seil- oder Stangenverbindung 62, 62' wenigstens einen Gewindeabschnitt 63, 63' über welchen die Seil- oder Stangenverbindung 62, 62' bedarfsweise kürzbar bzw. verlängerbar und nach Erreichen der jeweils gewünschten Spannlänge vorspannbar ist, um ein Auseinanderdriften bzw. Abdriften einzelner Pflasterungselemente 61, 61' gegenüber dem Sockelelement 14, 14', und umgekehrt, zu unterbinden. Die bedarfsweise Erweiterbarkeit und Kürzbarkeit dieser Seil- oder Stangenverbindung 62, 62' kommt weiters einer praktikablen Montierbarkeit bzw. einer möglichst kurzen Aufbauzeit zugute. Je nach Vorbaulänge bzw. je nach Länge und Anzahl der Pflasterungselemente 61, 61' ist also eine jeweils abgestimmte Länge zumindest einer Seil- oder Stangenverbindung 62, 62' erforderlich, um diese Pflasterungselemente 61, 61' bewegungsfest, jedoch innerhalb der Aufstandsebene gelenkig mit dem Sockelelement 14, 14', insbesondere mit dessen Betonkörper 17, 17' verbinden zu können. Die wenigstens eine Seil- oder Stangenverbindung 62, 62' zwischen dem wenigstens einen Pflasterungselement 61, 61' und dem wenigstens einen Betonkörper 17, 17' bildet dabei eine Art Kettenverbindung aus, durch welche die einzelnen Elemente, insbesondere die Pflasterungselemente 61, 61' und die Sockelelemente 14, 14' gegen Auseinanderdriften gesichert sind, jedoch in gewissem Ausmaß zueinander gelenkig bleiben.

Zumindest die Stirnenden von nebeneinander angereihten Pflasterungselementen 61, 61', welche von nebeneinander angereihten Sockelelementen 14, 14' abgewandt sind, sind bevorzugt mittels wenigstens einer Plattenverbindung 64 gegen Auseinandertriften gesichert, wie dies in Fig. 10 beispielhaft veranschaulicht wurde. Die Plattenverbindung 64 kann dabei durch eine einfache Verbindungslasche gebildet sein, welche die vom Sockelelement 14, 14' abgewandten Enden der Seil- oder Stangenverbindung 62, 62' zweier benachbarter Reihen von Pflasterungselementen 61, 61' miteinander verbindet. Auch diese Plattenverbindung 64 erlaubt eine Abwinkelung zwischen benachbarten Reihen von Pflasterungselementen, um Unebenheiten des Untergrundes 15 möglichst folgen zu können. Eine ungehinderte, vertikale Relativverstellung zwischen benachbarten Pflasterungselementen 61, 61' wird durch diese Plattenverbindung 64 jedoch unterbunden bzw. ab einem gewissen Ausmaß unterbunden.

Diese Plattenverbindung 64 zwischen benachbarten Pflasterungselementen 61, 61' ist mittels zumindest einem Leistenelement 65, 66, welches bevorzugt ebenso aus Beton besteht, verdeckbar. Dieses wenigstens eine Leistenelement 65, 66 ist gegenüber den Pflasterungselementen 61, 61' gegen Abdriften gesichert. Insbesondere ist das wenigstens eine Leistenelement 65, 66 mit wenigstens einem Pflasterungselement 61, 61' ablösungsfest verbunden. Diese Verbindung kann dabei durch eine Haken- oder Klemmverbindung oder alternativ durch eine Schraubverbindung bewerkstelligt sein. Die Leistenelemente 65, 66 können dabei an der Vorderseite und auch an den seitlichen Randabschnitten der Pflasterungselemente 61, 61' angeordnet sein, um einen definierten Abschluss dieses Vorbaukörpers aus Beton zu schaffen. Anstelle einer Schraub- oder Klemmverbindung können die Leistenelemente 65, 66 auch mittels wenigstens einer formschlüssig hintergreifenden Verbindung gegenüber Abdriften von den Pflasterungselementen 61, 61' gesichert sein.

Entsprechend einer vorteilhaften Ausführungsform sind zumindest zwei einander gegenüberliegende Wandabschnitte der Pflasterungselemente 61, 61' ausgehend von ihren Bodenabschnitten in Richtung zu dessen Oberseiten divergierend ausgerichtet. Dadurch kann auch bei welligen oder andersartig unebenen Untergründen 15 eine möglichst spaltlose Aneinanderreihung von Pflasterungselementen 61, 61' gewährleistet werden. Insbesondere wird dadurch auch dann eine möglichst spaltfreie Trittfläche 70 bzw. Aufstandsebene für die Benutzer des Selbstbedienungsautomaten 1 - Fig. 1 - erzielt, wenn der Untergrund 15 unterhalb der Pflasterungselemente 61, 61' relativ uneben oder wellig ist.

Wesentlich ist, dass ein Sockelelement 14 in Verbindung mit wenigstens einem Pflasterungselement 61, 61' aus Beton relativ rasch eine hohe Standfestigkeit für das Gehäuse oder das entsprechende Gehäusemodul 13, 13', 13" des Selbstbedienungsautomaten 1 bietet, durch welche eine gesonderte Verankerung des Sockelelementes 14, 14', 14" oder eines der Pflasterungselemente 61, 61' gegenüber dem Untergrund 15 erübrigt ist. Insbesondere wird durch die Verbindung zwischen dem wenigstens einen Betonkörper 17, 17' des wenigstens einen Sockelelementes 14, 14' und dem wenigstens einen Pflasterungselement 61, 61' aus Beton eine Art Standfuß geschaffen, welcher die Standfestigkeit dieses Fundamentsystems 2 erheblich steigert. Insbesondere wirkt sich die bodennahe, relativ hohe Masse dieses Fundamentsystems 2 günstig auf die Standsicherheit des Selbstbedienungsautomaten 1 bzw. der darauf abgestellten Gehäusemodule 13, 13', 13" aus. Die hohe Standsicherheit wird dabei in einfacher und effizienter Art und Weise durch die mechanische Verbindung bzw. Bewegungskopplung zwischen mehreren, jeweils tragbaren bzw. händisch manipulierbaren, vorgefertigten Betonkörpern erzielt.

Wie insbesondere aus Fig. 9 ersichtlich ist, können einander nächstliegende Wände einer Aneinanderreihung von Betonkörpers 17, 17' jeweils wenigstens einen bedarfsweise ausbrech- oder entfernbaren Wandabschnitt 67 aufweisen. Dieser bedarfsweise ausbrechbare Wandabschnitt 67 stellt quasi eine Sollbruchstelle in den einander gegenüberliegenden Seitenwänden 56, 57 eines Betonkörpers 17 dar, um bei Bedarf einen Durchlass für Kabelverbindungen zu bilden. Dadurch wird eine rasche und möglichst einfache, insbesondere eine möglichst werkzeugarme Installation eines Selbstbedienungsautomaten 1 ermöglicht.

Entsprechend einer vorteilhaften Ausführungsform ist in zumindest einem Pflasterungselement 61, 61' des plattenartigen Betonkörpers vor dem Selbstbedienungsautomaten 1 wenigstens ein Beleuchtungskörper 68, 68' eingebaut, wie dies in Fig. 1 beispielhaft veranschaulicht wurde. Dieser wenigstens eine in den Boden-Vorbaukörper aus vorgefertigten Betonplatten bündig oder zumindest annähernd bündig integrierte Beleuchtungskörper 68, 68' ist zur Beleuchtung des Umgebungsbereiches eines Selbstbedienungsautomaten 1 und/oder zur Beleuchtung der Frontseite oder des Innenraums von geöffneten Aufnahmefächern 5, 5', 5" eines Aufbewahrungsautomaten 3 ausgebildet. Der wenigstens eine Beleuchtungskörper 68, 68' kann durch standardmäßige Halogen- oder LED-Leuchtkörper gebildet sein und wird bevorzugt dämmerungsabhängig aktiviert und deaktiviert.

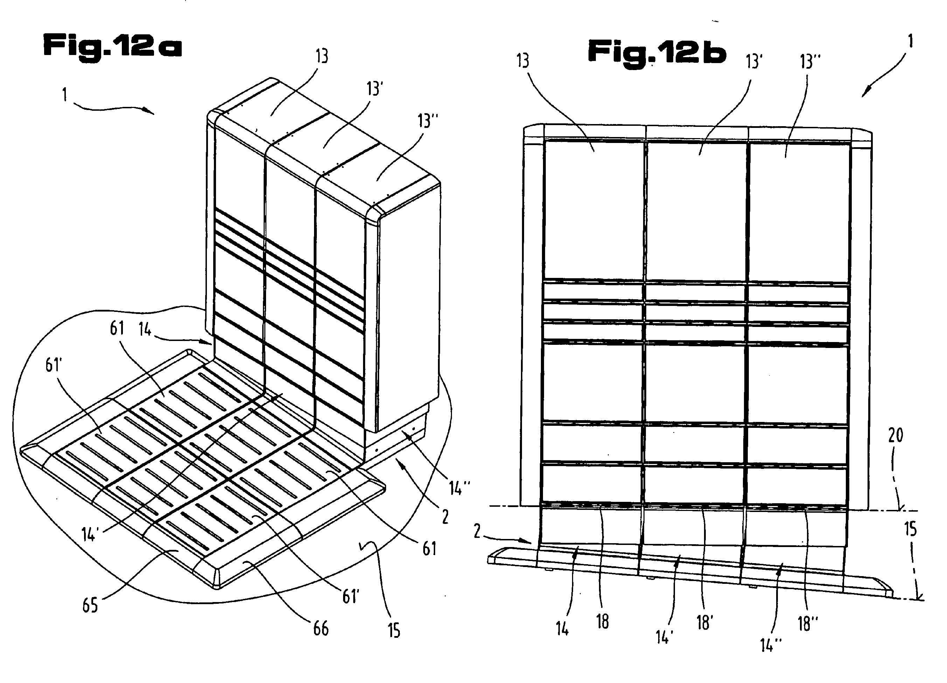

In den Fig. 12a, 12b ist eine vorteilhafte Wirkungsweise des Fundamentsystems 2 veranschaulicht. Daraus ist ersichtlich, dass das Fundamentsystem 2 problemlos auch auf abschüssigen Stellen bzw. Untergründen 15 platziert werden kann. Durch die individuelle Justierbarkeit der Höhe und der seitlichen Ausrichtung der Sockelelemente 14, 14', 14", insbesondere deren Tragelemente 18, 18', 18", kann eine horizontale, einheitliche Abstützebene 20 für die Gehäusemodule 13, 13', 13" geschaffen werden. Auch die Spaltmaße zwischen benachbarten Gehäusemodulen 13, 13', 13" können durch die vorhergehend beschriebene, translatorische Verbindung 52 - siehe die Fig. 3-5 - vereinheitlicht bzw. ausgeglichen werden.

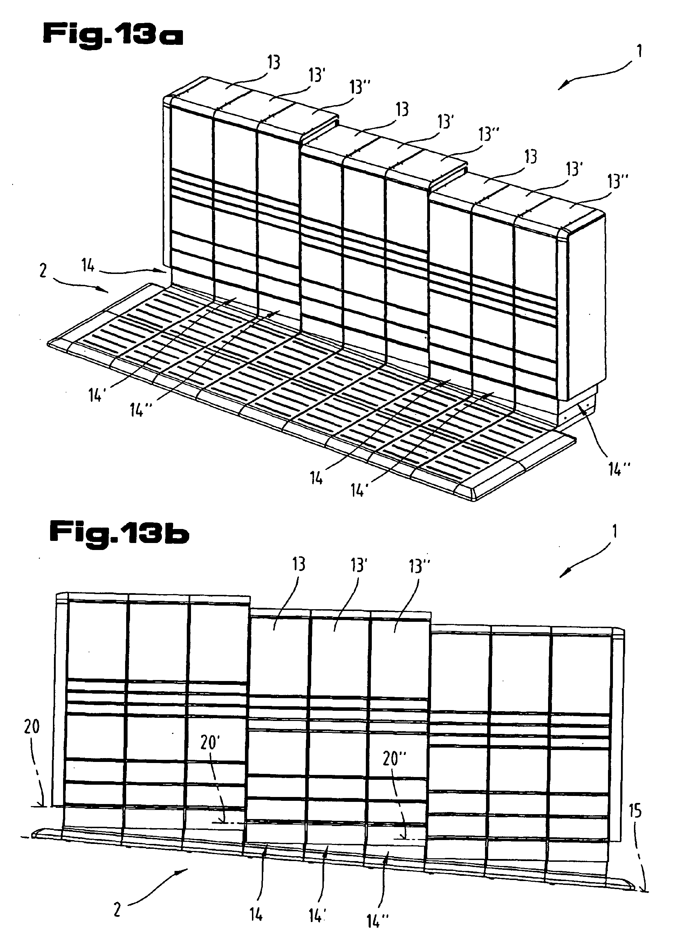

Vor allem bei starken Gefällen bzw. langen Aneinanderreihungen ist es auch möglich, zumindest eine Abstufung vorzusehen und die einzelnen Gehäusemodule 13, 13', 13" oder Gruppen von Gehäusemodule 13, 13', 13" auf unterschiedlichen, jeweils horizontal ausgerichteten Abstützebenen 20, 20', 20" abzustellen, wie dies in den Fig. 13a, 13b veranschaulicht wurde. Ebenso ist es möglich, unmittelbar aneinander gereihte Gehäusemodule 13 und 13' bzw. 13' und 13" eines Selbstbedienungsautomaten 1 jeweils auf unterschiedlichen, horizontal ausgerichteten Abstützebenen 20, 20', 20" zu positionieren,

Die Ausführungsbeispiele zeigen mögliche Ausführungsvarianten des Fundamentsystems 2 bzw. des darauf abgestellten Selbstbedienungsautomaten 1, wobei an dieser Stelle bemerkt sei, dass die Erfindung nicht auf die speziell dargestellten Ausführungsvarianten derselben eingeschränkt ist.

Der Ordnung halber sei abschließend darauf hingewiesen, dass zum besseren Verständnis des Aufbaus des Fundamentsystems 2 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Selbstbedienungsautomat | 34 | Durchbruch |
| 2 | Fundamentsystem | 35, 35' | Randabschnitt |
| 3 | Aufbewahrungsautomat | | |
| 4 | Identifizierungsvorrichtung | 36, 36' | Randabschnitt |
| 5,5', 5" | Aufnahmefach | 37 | Gewindestift |
| | | 38 | Überstand |
| 6 | Fachanordnung | 39 | Gewindehülse |
| 7 | Steuerungsvorrichtung | 40 | Schraubenmutter |
| 8 | Ein- und/oder Ausgabevorrichtung | | |
| | | 41 | Abstützkopf |
| 9 | Warenidentifikationsmittel | 42 | Stützfläche |
| 10 | Bezahlungsmodul | 43 | Durchbruch |
| | | 44 | Schraubenkopf |
| 11 | Steuerungsgehäuse | 45 | Ausnehmung |
| 12, 12' | Fachmodul | | |
| 13, 13', 13" | Gehäusemodul | 46 | Stützfläche |
| | | 47, 47' | Element |
| 14, 14', 14" | Sockelelement | 48, 48' | Tellerfeder |
| | | 49 | Spielraum |
| 15 | Untergrund | 50, 50' | Schraubverbindung |
| | | | |
| 16, 16', 16" | Abstützfläche | 51 | Gelenksverbindung |
| | | 52 | translatorische Verbindung |
| 17, 17', 17" | Betonkörper | 53, 53' | Durchbruch |
| | | 54 | Bodenplatte |
| 18, 18', 18" | Tragelement | 55, 55' | Öffnung |
| | | | |
| 19 | Einstellvorrichtung | 56 | Seitenwand |
| 20, 20', 20" | Abstützebene | 57 | Seitenwand |
| | | 58, 58' | Schraubverbindung |
| | | 59 | Vorderseite |
| 21, 21', 21", 21'" | Stellelement | 60 | Rückseite |
| | | | |
| 22 | Hohlraum | 61, 61' | Pflasterungselement |
| 23 | Durchbruch | 62, 62' | Seil- oder Stangenverbindung |
| 24 | Wandabschnitt | 63, 63' | Gewindeabschnitt |
| 25 | Wandabschnitt | 64 | Plattenverbindung |
| | | 65 | Leistenelement |
| 26 | Oberseite | | |
| 27 | Basiselement | 66 | Leistenelement |
| 28 | Schenkel | 67 | Wandabschnitt |
| 29 | Schenkel | 68, 68' | Beleuchtungskörper |
| 30 | Verblendungsabschnitt | 69 | Horizontalebene |
| | | 70 | Trittfläche |
| 31 | Verblendungsabschnitt | | |
| 32 | Höhe | | |
| 33 | Überlappung | | |

## Patentansprüche

1. Fundamentsystem (2) zur lastabtragenden Aufnahme eines Gehäuses oder von wenigstens einem Gehäusemodul (13, 13', 13") eines Selbstbedienungsautomaten (1), mit wenigstens einem Sockelelement (14, 14', 14"), welches wenigstens eine Abstützfläche (16, 16', 16") für ein Gehäuse oder für wenigstens ein Gehäusemodul (13, 13', 13") eines Selbstbedienungsautomaten (1) aufweist, wobei das Sockelelement (14, 14', 14") einen Betonkörper (17, 17', 17") und wenigstens ein darauf abgestütztes, metallisches Tragelement (18, 18', 18") umfasst, an welchem die wenigstens eine Abstützfläche (16, 16', 16") für ein Gehäuse oder Gehäusemodul (13, 13', 13") eines Selbstbedienungsautomaten (1) ausgebildet ist, und wobei das metallische Tragelement (18, 18', 18") mittels wenigstens einer Einstellvorrichtung (19) in Bezug auf den Betonkörper (17, 17', 17") des Sockelelementes (14, 14', 14") ausnivellierbar ist, **dadurch gekennzeichnet, dass** an zumindest einer Seite, insbesondere an der Vorderseite (59) und/oder an der Rückseite (60) eines Sockelelementes (14, 14', 14") zumindest ein Pflasterungselement (61, 61') aus Beton angereiht ist und das Pflasterungselement (61, 61') mit dem Sockelelement (14, 14', 14"), insbesondere mit dessen Betonkörper (17, 17', 17") verbunden ist, sodass ein Abdriften des Pflasterungselementes (61, 61') gegenüber dem Sockelelement (14, 14', 14") unterbunden ist.

2. Fundamentsystem nach Anspruch 1, **dadurch gekennzeichnet, dass** der Betonkörper (17, 17', 17") quaderförmig ausgebildet ist und an zumindest zwei einander gegenüberliegenden Wandabschnitten (24, 25) sowie an seiner Oberseite (26) wenigstens teilweise vom metallischen Tragelement (18, 18', 18") umgrenzt ist.

3. Fundamentsystem nach Anspruch 1 oder 2, **dadurch gekennzeichnet, dass** das metallische Tragelement (18, 18', 18") in Bezug auf den Betonkörper (17, 17', 17") haubenartig ausgebildet ist.

4. Fundamentsystem nach einem der vorhergehenden Ansprüche, **dadurch gekennzeichnet, dass** das metallische Tragelement (18, 18', 18") in Bezug auf einen Vertikalschnitt eine annährend C-förmige Geometrie aufweist, wobei ein Basiselement (27) des C-förmigen Körpers die Oberseite (26) des Betonkörpers (17, 17', 17") zumindest abschnittsweise überdeckt und einander gegenüberliegenden Schenkel (28, 29) dieses C-förmigen Körpers Verblendungsabschnitte (30, 31) darstellen, welche einander gegenüberliegende Wandabschnitte (24, 25) des Betonköpers (17, 17', 17") zumindest teilweise überdecken.

5. Fundamentsystem nach einem der vorhergehenden Ansprüche, **dadurch gekennzeichnet, dass** der Betonkörper (17, 17', 17") hohlprismatisch ausgebildet ist, wobei sich dessen Hohlraum (22) ausgehend von der Oberseite (26) des Betonkörpers (17, 17', 17") durchgehend bis zur Unterseite des Betonkörpers (17, 17', 17") erstreckt, sodass ein vertikal ausgerichteter Durchbruch (23) ausgebildet ist.

6. Fundamentsystem nach einem der vorhergehenden Ansprüche, **dadurch gekennzeichnet, dass** der Betonkörper (17, 17', 17") vorgefertigt und zur unmittelbaren Platzierung am jeweiligen Aufstellungsort eines Selbstbedienungsautomaten (1) vorgesehen ist.

7. Fundamentsystem nach einem der vorhergehenden Ansprüche, **dadurch gekennzeichnet, dass** der Betonkörper (17, 17', 17") als Fertigbauteil ausgeführt ist, der eine Masse aufweist, die derart gewählt ist, dass eine Manipulation, insbesondere eine Verlegung, ohne maschinelle Hilfsmittel möglich ist.

8. Fundamentsystem nach einem der vorhergehenden Ansprüche, **dadurch gekennzeichnet, dass** die Einstellvorrichtung (19) wenigstens ein Stellelement (21), insbesondere zumindest drei, bevorzugt vier in Vertikalrichtung manuell justierbare Stellelemente (21, 21', 21", 21"') umfasst.

9. Fundamentsystem nach einem der vorhergehenden Ansprüche, **dadurch gekennzeichnet, dass** die Einstellvorrichtung (19) zumindest ein Stellelement (21, 21', 21", 21"') umfasst, welches einen vertikal ausgerichteten Gewindestift (37) aufweist, dessen vertikaler Überstand (38) gegenüber dem Betonkörper (17, 17', 17") durch Verdrehen des Gewindestiftes (37) einstellbar ist.

10. Fundamentsystem nach Anspruch 9, **dadurch gekennzeichnet, dass** die Einstellvorrichtung (19) zumindest eine in den Betonkörper (17, 17', 17") eingegossene Gewindehülse (39) oder Gewindeplatte umfasst, über welche die Einschraubtiefe des wenigstens einen Gewindestiftes (37) in Bezug auf den Betonkörper (17, 17', 17") bedarfsweise veränderbar ist.

11. Fundamentsystem nach Anspruch 9, **dadurch gekennzeichnet, dass** in dem vom Betonkörper (17, 17', 17") abgewandten Endabschnitt des wenigstens einen Gewindestiftes (37) ein relativ zum Gewindestift (37) winkelveränderlich gelagerter Abstützkopf (41) für das metallische Tragelement (18, 18', 18") ausgebildet ist.

12. Fundamentsystem nach Anspruch 11, **dadurch gekennzeichnet, dass** der Abstützkopf (41) gegenüber dem Gewindestift (37) gelenkig, insbesondere kardanisch gelagert ist.

13. Fundamentsystem nach Anspruch 11, **dadurch gekennzeichnet, dass** der Abstützkopf (41) vom Gewindestift (37) zumindest teilweise durchsetzt ist und der Abstützkopf (41) mittels einer ersten Stützfläche (46) unter Zwischenschaltung von wenigstens einem elastisch nachgiebigen Element (47, 47') am Gewindestift (37) lastübertragend abgestützt ist, wobei der Abstützkopf (41) entgegen der Kraftwirkung des elastisch nachgiebigen Elementes (47, 47') gegenüber dem Gewindestift (37) neigungsveränderlich gehaltert ist.

14. Fundamentsystem nach Anspruch 11, **dadurch gekennzeichnet, dass** der Abstützkopf (41) unter Zwischenschaltung eines unteren und eines oberen, elastischen Elementes (47, 47') relativ zur Längsachse des Gewindestiftes (37) winkelverstellbar positioniert ist, wobei der Gewindestift (37) den Abstützkörper (41) mit radialem Spielraum (49) durchsetzt.

15. Fundamentsystem nach Anspruch 13 oder 14, **dadurch gekennzeichnet, dass** das elastisch nachgiebige Element (47, 47') durch zumindest eine auf den Gewindestift (37) aufgefädelte Tellerfeder (48, 48') gebildet ist.

16. Fundamentsystem nach einem der vorhergehenden Ansprüche, **dadurch gekennzeichnet, dass** zumindest zwei einander gegenüberliegende Endabschnitte des metallischen Tragelementes (18, 18', 18") jeweils Verblendungsabschnitte (30, 31) ausbilden, deren vertikale Höhe (32) derart bemessen ist, dass auch bei maximal ausgefahrener Stellung der Einstellvorrichtung (19) zwischen dem Betonkörper (17, 17', 17") und den Verblendungselementen (29, 30) eine auf die Vertikalrichtung bezogene Überlappung (33) verbleibt.

17. Fundamentsystem nach einem der vorhergehenden Ansprüche, **dadurch gekennzeichnet, dass** das Sockelelement (14, 14', 14") zur Abstützung einer mehrere Aufnahmefächer (5, 5', 5") aufweisenden Fachanordnung (6) oder eines Steuerungsgehäuses (11) von einem aus wenigstens einer Fachanordnung (6) und zumindest einem Steuerungsgehäuse (11) zusammengesetzten Aufbewahrungsautomaten (3) oder Verkaufsautomaten vorgesehen ist.

18. Fundamentsystem nach einem der vorhergehenden Ansprüche, **dadurch gekennzeichnet, dass** mehrere Sockelelemente (14, 14', 14") im Wesentlichen spaltfrei aneinander reihbar sind und dabei jeweils baugleich ausgeführt sind, sodass die Anzahl der Sockelelemente (14, 14', 14") ausgehend von einem oder von beiden Enden der Aneinanderreihung bedarfsweise verringer- und vergrößerbar ist.

19. Fundamentsystem nach einem der vorhergehenden Ansprüche, **dadurch gekennzeichnet, dass** das metallische Tragelement (18, 18', 18") ein plattenartiges, im Wesentlichen ebenflächiges Basiselement (27) zur Abstützung eines Gehäusemoduls (13, 13', 13") eines modulartig zusammensetzbaren Selbstbedienungsautomaten (1) umfasst.

20. Fundamentsystem nach Anspruch 19, **dadurch gekennzeichnet, dass** das plattenartige Basiselement (27) einen zentralen Durchbruch (34) aufweist und Randabschnitte (35, 35'; 36, 36') des Basiselementes (27) zur lastabtragenden Abstützung der Wandabschnitte eines schrankartigen Gehäusemoduls (13, 13', 13") ausgebildet sind.

21. Fundamentsystem nach einem der vorhergehenden Ansprüche, **dadurch gekennzeichnet, dass** aneinander gereihte Sockelelemente (14, 14', 14"), insbesondere deren Betonkörper (17, 17', 17"), untereinander derart verbunden sind, dass ein Auseinanderdriften unterbunden ist.

22. Fundamentsystem nach Anspruch 1, **dadurch gekennzeichnet, dass** die Verbindung zwischen dem Sockelelement (14, 14', 14") und dem wenigstens einen Pflasterungselement (61, 61') durch wenigstens eine das Pflasterungselement (61, 61') und das Sockelelement (14, 14', 14") zumindest teilweise durchsetzende Seil- oder Stangenverbindung (62, 62') gebildet ist.

23. Fundamentsystem nach Anspruch 1, **dadurch gekennzeichnet, dass** die gegenüber aneinander gereihten Sockelelementen (14, 14', 14") abgewandten Stirnenden von aneinander gereihten Pflasterungselementen (61, 61') mittels einer Plattenverbindung (64) gegen Auseinanderdriften gesichert sind.

24. Fundamentsystem nach Anspruch 1, **dadurch gekennzeichnet, dass** zumindest zwei einander gegenüberliegende Wandabschnitte der Pflasterungselemente (61, 61') ausgehend von ihren Bodenabschnitten in Richtung zu dessen Oberseiten divergierend verlaufen.

25. Fundamentsystem nach Anspruch 1, **dadurch gekennzeichnet, dass** ein Sockelelement (14, 14', 14") in Verbindung mit wenigstens einem Pflasterungselement (61, 61') aus Beton eine Standfestigkeit für ein Gehäuse oder Gehäusemodul (13, 13', 13") eines Selbstbedienungsautomaten (1) aufweist, die eine Verankerung des Sockelelementes (14, 14', 14") oder des Pflasterungselementes (61, 61') gegenüber dem Untergrund (15) erübrigt.

26. Fundamentsystem nach einem der vorhergehenden Ansprüche, **dadurch gekennzeichnet, dass** einander nächstliegende Seitenwände (56, 57) einer Aneinanderreihung von Betonkörpern (17, 17', 17") jeweils wenigstens einen bedarfsweise ausbrech- oder entfernbaren Wandabschnitt (67) aufweisen.

## Claims

1. Foundation system (2) for receiving the load of a housing or at least one housing module (13, 13', 13") of a self-service machine (1), comprising at least one base element (14, 14', 14"), which has at least one support surface (16, 16', 16") for a housing or for at least one housing module (13, 13', 13") of a self-service machine (1), and the base element (14, 14', 14") comprises a concrete body (17, 17', 17") and at least one metal carrier element (18, 18', 18") supported thereon, on which the at least one support surface (16, 16', 16") for a housing or housing module (13, 13', 13") of a self-service machine (1) is formed, and the metal carrier element (18, 18', 18") can be leveled relative to the concrete body (17, 17', 17") of the base element (14, 14', 14") by means of at least one adjusting device (19), **characterized in that** at least one paving element (61, 61') of concrete is aligned along at least one side, in particular along the front face (59) and/or rear face (60) of a base element (14, 14', 14") and the paving element (61, 61') is connected to the base element (14, 14', 14"), in particular to its concrete body (17, 17', 17"), so that the paving element (61, 61') is prevented from drifting relative to base element (14, 14', 14").

2. Foundation system according to claim 1, **characterized in that** the concrete body (17, 17', 17") is square-shaped and is at least partially surrounded by the metal carrier element (18, 18', 18") at least on two mutually opposing wall portions (24, 25) and at its top face (26).

3. Foundation system according to claim 1 or 2, **characterized in that** the metal carrier element (18, 18', 18") is embodied to be hood-type with respect to the concrete body (17, 17', 17").

4. Foundation system according to one of the preceding claims, **characterized in that** the metal carrier element (18, 18', 18") has an approximately C-shaped geometry by reference to a vertical section, and a base element (27) of the C-shaped body covers at least certain portions of the top face (26) of the concrete body (17, 17', 17"), and mutually opposing arms (28, 29) of this C-shaped body constitute facing portions (30, 31) which at least partially cover mutually opposing wall portions (24, 25) of the concrete body (17, 17', 17").

5. Foundation system according to one of the preceding claims, **characterized in that** the concrete body (17, 17', 17") is embodied to be hollow prismatic, and its cavity (22) extends continuously from the top face (26) of the concrete body (17, 17', 17") to the bottom face of the concrete body (17, 17', 17"), thereby forming a vertically oriented orifice (23).

6. Foundation system according to one of the preceding claims, **characterized in that** the concrete body (17, 17', 17") is prefabricated and provided for being directly positioned at the respective installation site of a self-service machine (1).

7. Foundation system according to one of the preceding claims, **characterized in that** the concrete body (17, 17', 17") is embodied to be a prefabricated component with a weight selected so that it can be manipulated, in particular laid, without mechanical aids.

8. Foundation system according to one of the preceding claims, **characterized in that** the adjusting device (19) comprises at least one adjusting element (21), in particular at least three, preferably four adjusting elements (21, 21', 21", 21"') which can be manually adjusted in the vertical direction.

9. Foundation system according to one of the preceding claims, **characterized in that** the adjusting device (19) comprises at least one adjusting element (21, 21', 21", 21"') which has a vertically oriented threaded bolt (37), the vertical protuberance (38) of which relative to the concrete body (17, 17', 17") can be adjusted by turning the threaded bolt (37).

10. Foundation system according to claim 9, **characterized in that** the adjusting device (19) comprises at least one threaded sleeve (39) or threaded plate cast into the concrete body (17, 17', 17"), by means of which the screwing-in depth of the at least one threaded bolt (37) relative to the concrete body (17, 17', 17") can be varied if necessary.

11. Foundation system according to claim 9, **characterized in that** a support head (41) for the metal carrier element (18, 18', 18") is mounted at the end portion of the at least one threaded bolt (37) remote from the concrete body (17, 17', 17"), the angle of which relative to the threaded bolt (37) can be varied.

12. Foundation system according to claim 11, **characterized in that** the support head (41) is mounted so as to articulate relative to the threaded bolt (37), in particular in a gimbal manner.

13. Foundation system according to claim 11, **characterized in that** the threaded bolt (37) extends at least partially through the support head (41) and the support head (41) is supported on the threaded bolt (37) in a load-transmitting arrangement by means of a first support surface (46) via at least one interconnected elastically flexible element (47, 47'), and the support head (41) is retained against the force of the elastically flexible element (47, 47') so that its inclination relative to the threaded bolt (37) can be varied.

14. Foundation system according to claim 11, **characterized in that** the support head (41) is positioned via an interconnected bottom and top elastic element (47, 47') so that its angle relative to the longitudinal axis of the threaded bolt (37) can be adjusted, and the threaded bolt (37) extends through the support head (41) with a radial clearance (49).

15. Foundation system according to claim 13 or 14, **characterized in that** the elastically flexible element (47, 47') is provided in the form of at least one plate spring (48, 48') threaded over the threaded bolt (37).

16. Foundation system according to one of the preceding claims, **characterized in that** at least two mutually opposing end portions of the metal carrier element (18, 18', 18") respectively constitute facing portions (30, 31), the vertical height (32) of which is dimensioned so that an overlap (33) remains by reference to the vertical direction even when the adjusting device (19) is extracted to the maximum position between the concrete body (17, 17', 17") and facing elements (29, 30).

17. Foundation system according to one of the preceding claims, **characterized in that** the base element (14, 14', 14") is provided as a means of supporting a compartment system (6) comprising several holding compartments (5, 5', 5") or a controller housing (11) of a safety-deposit machine (3) or automatic vending machine made up of at least one compartment system (6) and at least one controller housing (11).

18. Foundation system according to one of the preceding claims, **characterized in that** several base elements (14, 14', 14") can be aligned in a row essentially without gaps and are of an identical structural design so that the number of base elements (14, 14', 14") can be reduced and increased from one or both ends of the row as required.

19. Foundation system according to one of the preceding claims, **characterized in that** the metal carrier element (18, 18', 18") has a plate-shaped, essentially flat base element (27) for supporting a housing module (13, 13', 13") of a self-service machine (1) assembled on a modular basis.

20. Foundation system according to claim 19, **characterized in that** the plate-shaped base element (27) has a central orifice (34) and peripheral portions (35, 35'; 36, 36') of the base element (27) are designed to provide a load-bearing support for the wall portions of a cabinet-type housing module (13, 13', 13").

21. Foundation system according to one of the preceding claims, **characterized in that** base elements (14, 14', 14") mutually aligned in a row, in particular their concrete bodies (17, 17', 17"), are connected to one another to prevent them from drifting apart.

22. Foundation system according to claim 1, **characterized in that** the connection between the base element (14, 14', 14") and the at least one paving element (61, 61') is provided in the form of at least one cable or rod connection (62, 62') extending at least partially through the paving element (61, 61') and base element (14, 14', 14").

23. Foundation system according to claim 1, **characterized in that** the end faces of mutually aligned paving elements (61, 61') remote from the mutually aligned base elements (14, 14', 14") are secured by means of a plate connection (64) to prevent them from drifting apart.

24. Foundation system according to claim 1, **characterized in that** at least two mutually opposing wall portions of the paving elements (61, 61') extend in a diverging arrangement from their base portions in the direction toward their top faces.

25. Foundation system according to claim 1, **characterized in that** a base element (14, 14', 14") in conjunction with at least one paving element (61, 61') of concrete affords a stability for a housing or housing module (13, 13', 13") of a self-service machine (1) that obviates the need to anchor the base element (14, 14', 14") or paving element (61, 61') with respect to the underlying ground (15).

26. Foundation system according to one of the preceding claims, **characterized in that** mutually adjacent side walls (56, 57) of concrete bodies (17, 17', 17") aligned in a row respectively have at least one wall portion (67) which can be broken open and removed if necessary.

## Revendications

1. Système de fondations (2) pour recevoir, avec un transfert de charges, un boîtier ou au moins un module de boîtier (13, 13', 13") d'un automate en libre-service (1), comprenant au moins un élément de socle (14, 14', 14") qui présente au moins une surface de support (16, 16', 16") pour un boîtier ou pour au moins un module de boîtier (13, 13', 13") d'un automate en libre-service (1), étant entendu que l'élément de socle (14, 14', 14") comprend un corps en béton (17, 17', 17") et au moins un élément porteur métallique (18, 18', 18") prenant appui sur celui-ci, sur lequel l'au moins une surface de support (16, 16', 16") pour un boîtier ou un module de boîtier (13, 13', 13") d'un automate en libre-service (1) est réalisée, et étant entendu que l'élément porteur métallique (18, 18', 18") peut être mis de niveau par rapport au corps de béton (17, 17', 17") de l'élément de socle (14, 14', 14") au moyen d'au moins un dispositif de réglage (19), **caractérisé en ce que** sur au moins un côté, en particulier sur le côté avant (59) et/ou sur le côté arrière (60) d'un élément de socle (14, 14', 14"), au moins un élément de pavage (61, 61') en béton peut être aligné et l'élément de pavage (61, 61') est relié avec l'élément de socle (14, 14', 14"), en particulier avec son corps en béton (17, 17', 17") de telle sorte qu'une dérive de l'élément de pavage (61, 61') par rapport à l'élément de socle (14, 14', 14") est empêchée.

2. Système de fondations selon la revendication 1, **caractérisé en ce que** le corps en béton (17, 17', 17") est réalisé en forme de parallélépipède rectangle et il est délimité au moins en partie par l'élément porteur métallique (18, 18', 18") sur au moins deux sections de parois (24, 25) opposées l'une à l'autre ainsi que sur son côté supérieur (26).

3. Système de fondations selon la revendication 1 ou 2, **caractérisé en ce que** l'élément porteur métallique (18, 18', 18") est réalisé à la manière d'un capot par rapport au corps en béton (17, 17', 17").

4. Système de fondations selon l'une des revendications précédentes, **caractérisé en ce que** l'élément porteur métallique (18, 18', 18") présente, au niveau d'une coupe verticale, une géométrie sensiblement en forme de C, étant entendu qu'un élément de base (27) du corps en forme de C recouvre au moins en partie le côté supérieur (26) du corps en béton (17, 17', 17") et des branches (28, 29) opposées l'une à l'autre de ce corps en forme de C constituent des sections de revêtement (30, 31) qui recouvrent au moins en partie des sections de parois (24, 25) opposées l'une à l'autre du corps en béton (17, 17', 17").

5. Système de fondations selon l'une des revendications précédentes, **caractérisé en ce que** le corps en béton (17, 17', 17") est réalisé en forme de prisme creux, étant entendu que son espace creux (22) s'étend de façon continue à partir du côté supérieur (26) du corps en béton (17, 17', 17") jusqu'au côté inférieur du corps en béton (17, 17', 17"), de telle sorte qu'un percement orienté verticalement (23) est formé.

6. Système de fondations selon l'une des revendications précédentes, **caractérisé en ce que** le corps en béton (17, 17', 17") est fabriqué au préalable et prévu pour le placement direct à l'endroit d'installation respectif d'un automate en libre-service (1).

7. Système de fondations selon l'une des revendications précédentes, **caractérisé en ce que** le corps en béton (17, 17', 17") est réalisé comme élément préfabriqué qui présente une masse qui est choisie de telle sorte qu'une manipulation, en particulier un déplacement, est possible sans l'aide d'une machine.

8. Système de fondations selon l'une des revendications précédentes, **caractérisé en ce que** le dispositif de réglage (19) comprend au moins un élément de correction (21), en particulier au moins trois, et de préférence quatre éléments de correction pouvant être ajustés manuellement dans la direction verticale (21, 21', 21", 21"').

9. Système de fondations selon l'une des revendications précédentes, **caractérisé en ce que** le dispositif de réglage (19) comprend au moins un élément de correction (21, 21', 21", 21"') qui présente une tige filetée (37) orientée verticalement dont le dépassement vertical (38) par rapport au corps en béton (17, 17', 17") peut être réglé en faisant tourner la tige filetée (37).

10. Système de fondations selon la revendication 9, **caractérisé en ce que** le dispositif de réglage (19) comprend au moins une plaque filetée ou une douille filetée (39) noyée dans le corps en béton (17, 17', 17"), au moyen de laquelle la profondeur de vissage de l'au moins une tige filetée (37) par rapport au corps en béton (17, 17', 17") peut être réglée au besoin.

11. Système de fondations selon la revendication 9, **caractérisé en ce que** dans la section d'extrémité de l'au moins une tige filetée (37) opposée au corps en béton (17, 17', 17"), une tête de support (41) montée dans un angle variable par rapport à la tige filetée (37) est réalisée pour l'élément porteur métallique (18, 18', 18").

12. Système de fondations selon la revendication 11, **caractérisé en ce que** la tête de support (41) est montée de façon articulée, en particulier avec un cardan, par rapport à la tige filetée (37).

13. Système de fondations selon la revendication 11, **caractérisé en ce que** la tête de support (41) est traversée au moins en partie par la tige filetée (37) et la tête de support (41) prend appui avec un transfert de charges sur la tige filetée (37) au moyen d'une première surface d'appui (46), au moins un élément souple élastique (47, 47') étant interposé, étant entendu que la tête de support (41) est maintenue dans une inclinaison variable par rapport à la tige filetée (37) en s'opposant à l'action des forces de l'élément souple élastique (47, 47').

14. Système de fondations selon la revendication 11, **caractérisé en ce que** la tête de support (41) est positionnée dans un angle réglable par rapport à l'axe longitudinal de la tige filetée (37), un élément élastique inférieur et supérieur (47, 47') étant interposé, étant entendu que la tige filetée (37) traverse le corps de support (41) avec une marge de manoeuvre radiale (49).

15. Système de fondations selon la revendication 13 ou 14, **caractérisé en ce que** l'élément souple élastique (47, 47') est formé par au moins une rondelle à ressort (48, 48') enfilée sur la tige filetée (37).

16. Système de fondations selon l'une des revendications précédentes, **caractérisé en ce qu'**au moins deux sections d'extrémité opposées l'une à l'autre de l'élément porteur métallique (18, 18', 18") forment chacune des sections de revêtement (30, 31), dont la hauteur verticale (32) est mesurée de telle sorte que même dans la position déployée au maximum du dispositif de réglage (19), il subsiste un chevauchement (33) dans la direction verticale entre le corps en béton (17, 17', 17") et les éléments de revêtement (29, 30).

17. Système de fondations selon l'une des revendications précédentes, **caractérisé en ce que** l'élément de socle (14, 14', 14") est prévu pour soutenir un agencement de compartiments (6) présentant plusieurs compartiments de réception (5, 5', 5") ou un boîtier de commande (11) d'un automate de stockage (3) ou d'un automate de vente composé d'au moins un agencement de compartiments (6) et d'au moins un boîtier de commande (11).

18. Système de fondations selon l'une des revendications précédentes, **caractérisé en ce que** plusieurs éléments de socle (14, 14', 14") peuvent être alignés les uns après les autres essentiellement sans interstice, et ce faisant, ils sont chacun réalisés dans une construction similaire de telle sorte que le nombre d'éléments de socle (14, 14', 14") peut être réduit ou augmenté selon les besoins en partant d'une ou des deux extrémités de l'alignement.

19. Système de fondations selon l'une des revendications précédentes, **caractérisé en ce que** l'élément porteur métallique (18, 18', 18") comprend un élément de base similaire à une plaque (27), ayant une surface essentiellement plane, destiné à soutenir un module de boîtier (13, 13', 13") d'un automate en libre-service (1) pouvant être assemblé à partir de modules.

20. Système de fondations selon la revendication 19, **caractérisé en ce que** l'élément de base similaire à une plaque (27) présente un percement central (34) et des sections de bord (35, 35' ; 36, 36') de l'élément de base (27) sont réalisées de façon à supporter, avec un transfert de charges, les sections de parois d'un module de boîtier (13, 13', 13") similaire à une armoire.

21. Système de fondations selon l'une des revendications précédentes, **caractérisé en ce que** des éléments de socle (14, 14', 14") alignés les uns avec les autres, en particulier leurs corps en béton (17, 17', 17"), sont reliés entre eux de telle sorte qu'une dérive les séparant est empêchée.

22. Système de fondations selon la revendication 1, **caractérisé en ce que** la jonction entre l'élément de socle (14, 14', 14") et l'au moins un élément de pavage (61, 61') est formée au moyen d'au moins une liaison par câbles ou par barres (62, 62') traversant au moins en partie l'élément de pavage (61, 61') et l'élément de socle (14, 14', 14").

23. Système de fondations selon la revendication 1, **caractérisé en ce que** les extrémités frontales d'éléments de pavage (61, 61') alignés les uns avec les autres qui sont opposées à des éléments de socle (14, 14', 14") alignés les uns avec les autres sont protégées contre une dérive les séparant au moyen d'une jonction par plaques (64).

24. Système de fondations selon la revendication 1, **caractérisé en ce qu'**au moins deux sections de parois opposées l'une à l'autre des éléments de pavage (61, 61') s'étendent dans une orientation divergente à partir de leurs sections de fond dans la direction de leurs côtés supérieurs.

25. Système de fondations selon la revendication 1, **caractérisé en ce qu'**un élément de socle (14, 14', 14") présente, en conjonction avec au moins un élément de pavage (61, 61') en béton, une stabilité pour un boîtier ou un module de boîtier (13, 13', 13") d'un automate en libre-service (1) qui rend superflu un ancrage de l'élément de socle (14, 14', 14") ou de l'élément de pavage (61, 61') par rapport au sous-sol (15).

26. Système de fondations selon l'une des revendications précédentes, **caractérisé en ce que** des parois latérales (56, 57) les plus proches l'une de l'autre dans un alignement de corps en béton (17,17', 17") présentent chacune au moins une section de paroi (67) pouvant être percée ou démontée en cas de besoin.
